# EUROPEAN PATENT APPLICATION

(11) **EP 4 583 503 A1**
(43) Date of publication of application: **09.07.2025**
(21) Application number: 23860279.1
(22) Date of filing: 28.08.2023
(51) Int. Cl.: H04M 11/00, H04Q 9/00, G08G 1/09

(54) **INFORMATION PROCESSING METHOD AND INFORMATION PROCESSING DEVICE**

(30) Priority: 02.09.2022 JP 2022139709
(71) Applicant: Panasonic Intellectual Property Management Co., Ltd., Kadoma-shi, Osaka 571-0057 (JP)
(72) Inventor: KOTAKEHARA, Yuki, Kadoma-shi, Osaka 571-0057 (JP); KUHARA, Shunsuke, Kadoma-shi, Osaka 571-0057 (JP); ARAI, Toshiya, Kadoma-shi, Osaka 571-0057 (JP)
(74) Representative: Novagraaf International SA
(86) International application number: PCT/JP2023/030978
(87) International publication number: WO 2024/048517

(57) **Abstract**

An information processing method according to one aspect of the present disclosure includes acquiring, from a mobile body, first attention request information about an event that has occurred in the vicinity the mobile body at a first time (S401), determining an unnecessity degree in accordance with the first attention request information and past attention request information, the unnecessity degree indicating the degree to which operator attention or operation to be given to or performed in response to the first attention request information becomes unnecessary, the past attention request information being information that associates second attention request information acquired at a past time before the first time and support information that indicates operator support provided in response to the second attention request information (S402), determining, in accordance with the unnecessity degree, an output mode of outputting alert information that is based on the first attention request information (S403), and causing a terminal used by the operator to output the alert information in the determined output mode (S404).

## Description

### [Technical Field]

The present disclosure relates to an information processing method and an information processing device.

### [Background Art]

There are remote control systems that allow operators to remotely operate robots capable of autonomous traveling, according to the circumstances via wireless communication such as a wireless local area network (LAN) or a mobile phone line.

Such a remote control system detects a predetermined event from detection results obtained by various sensors of a robot to be controlled (hereinafter, also simply referred to as a "robot") observing the circumstances around the robot, examples of the various sensors including a millimeter wave radar, a laser radar, and a camera. When a predetermined event is detected, the remote control system causes the robot to give a notification to an operator via communication means. The operator remotely controls the robot (i.e., performs remote control) in accordance with the received notification.

For example, Patent Literature (PTL) 1 discloses a technique in which, when a vehicle traveling to the destination passes a point at which remote assistance is given to the vehicle, the timing of starting operator support is predicted based on the estimated time of arrival at that point where the vehicle requires remote assistance. In this way, PTL 1 enables remote operator assistance with optimal timing.

### [Citation List]

### [Patent Literature]

[PTL 1] Japanese Unexamined Patent Application Publication No.

### [Summary of Invention]

### [Technical Problem]

Conventionally, it has been envisioned that a robot requiring any operator support, such as temporarily stopping the robot, transmits a notification to an operator.

For example, in order to improve robot safety and to improve efficiency, a robot is allowed to be controlled remotely at the discretion of an operator in accordance with, for example, video in the vicinity of the robot. In such a case, a notification given from the robot to the operator for check (the notification is hereinafter also referred to as the "attention request") serves as a request to require operator support as necessary. Thus, there are cases where the operator who has received the attention request has given attention to the robot but ultimately has not provided any support.

Examples of such a case include cases where, when the robot passes near a pedestrian during travel, the robot issues an attention request indicating the presence of the approaching pedestrian. In this case, the operator gives attention to the robot in response to the attention request. Then, when there is a possibility of a collision between the robot and the pedestrian, the operator provides support such as temporarily stopping the robot, whereas when the robot just passes by the pedestrian, the operator does not take any particular action. In such a case, ultimately operator support becomes unnecessary.

In this way, some attention requests (notifications) may possibly require operator support but ultimately do not require any operator support. As a result of operators being distracted by such attention requests that do not require operator support, the overall efficiency of operation decreases and the load on operators increases.

In view of this, the present disclosure has been made to solve the issue described above, and it is an object of the present disclosure to provide an information processing method or the like that enables reducing the load on operators.

### [Solution to Problem]

To solve the issue described above, an information processing method according to one embodiment of the present disclosure is an information processing method that is executed by a computer. The information processing method includes acquiring first attention request information from a mobile body that is remotely given attention to or operated by an operator, the first attention request information being information about an event that has occurred in vicinity of the mobile body at a first time, determining an unnecessity degree in accordance with the first attention request information and past attention request information, the unnecessity degree indicating a degree to which operator attention or operation to be given to or provided in response to the first attention request information becomes unnecessary, the past attention request information being information stored in a storage and associating second attention request information and support information, the second attention request information being acquired at a past time before the first time, the support information indicating operator support provided in response to the second attention request information, determining, in accordance with the unnecessity degree, an output mode of outputting alert information that is based on the first attention request information, and causing a terminal used by the operator to output the alert information in the output mode determined.

An information processing device according to one embodiment of the present disclosure includes an acquirer that acquires first attention request information from a mobile body that is remotely given attention to or operated by an operator, the first attention request information being information about an event that has occurred in vicinity the mobile body at a first time, a first determiner that determines an unnecessity degree in accordance with the first attention request information and past attention request information, the unnecessary degree indicating a degree to which operator attention or operation to be given to or performed in response to the first attention request information becomes unnecessary, the past attention request information being information stored in a storage and associating second attention request information and support information, the second attention request information being acquired at a past time before the first time, the support information indicating operator support provided in response to the second attention request information, a second determiner that determines, in accordance with the unnecessity degree, an output mode of outputting alert information that is based on the first attention request information, and an output unit that causes a terminal used by the operator to output the alert information in the output mode determined.

An information processing method according to one embodiment of the present disclosure is an information processing method that is executed by a computer. The information processing method includes acquiring first attention request information from a mobile body that is remotely given attention to or operated by an operator, the first attention request information being information about a first event that has occurred in the vicinity of the mobile body at a first time, and causing a terminal used by the operator to display information about the first attention request information in accordance with the first attention request information and past attention request information, the past attention request information being information stored in a storage and associating second attention request information and support information, the second attention request information being acquired at a past time before the first time, the support information indicating operator support provided in response to the second attention request information.

### [Advantageous Effects of Invention]

The information processing method or the like according to one embodiment of the present disclosure enables reducing the load on operators.

### [Brief Description of Drawings]

[FIG. 1]

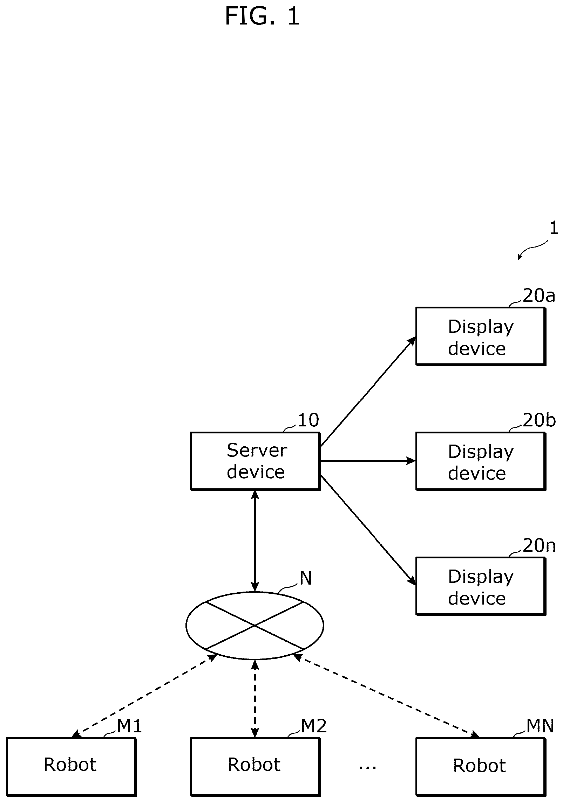

   FIG. 1 is a block diagram showing a configuration of a notification system according to an embodiment.
[FIG. 2]

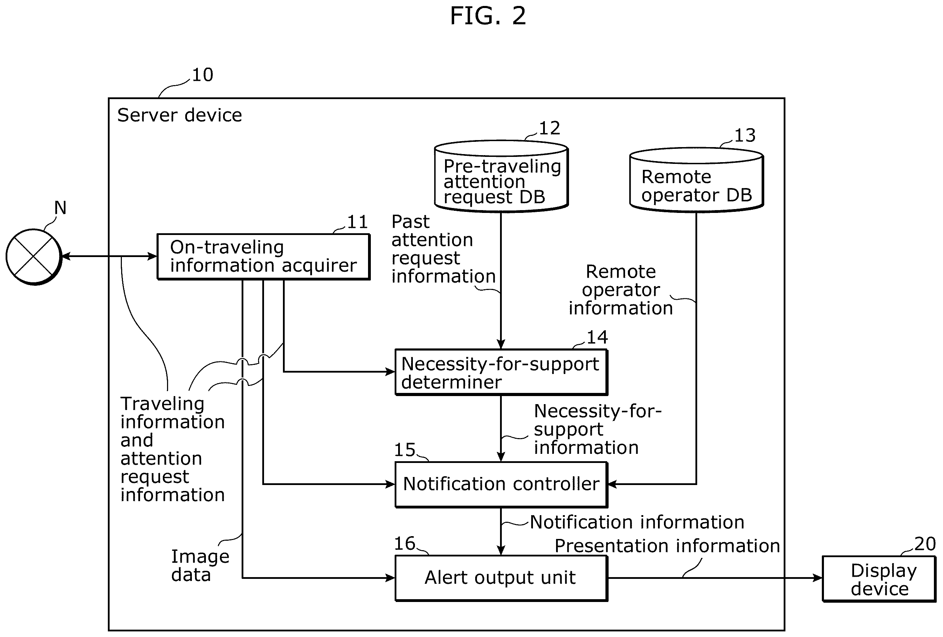

   FIG. 2 is a block diagram showing a functional configuration of a server device according to the embodiment.
[FIG. 3]

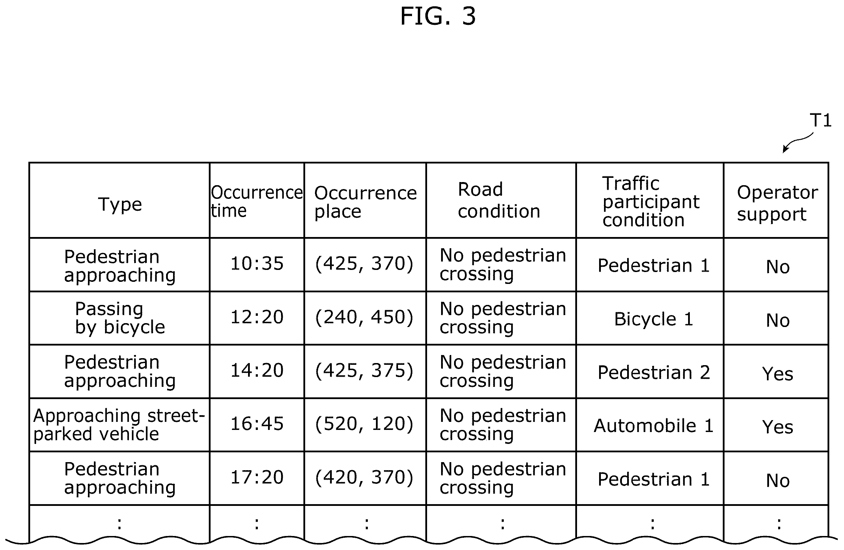

   FIG. 3 is a diagram showing one example of a table stored in a pre-driving attention request DB according to the embodiment.
[FIG. 4]

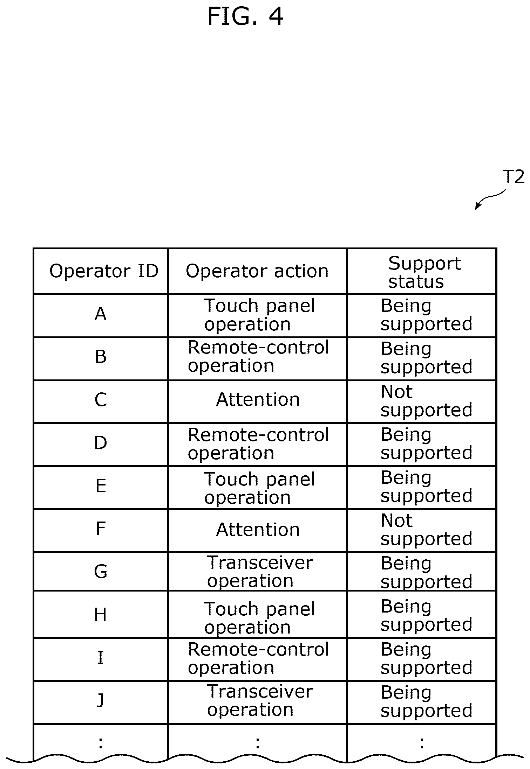

   FIG. 4 is a diagram showing one example of a table stored in a remote operator DB according to the embodiment.
[FIG. 5]

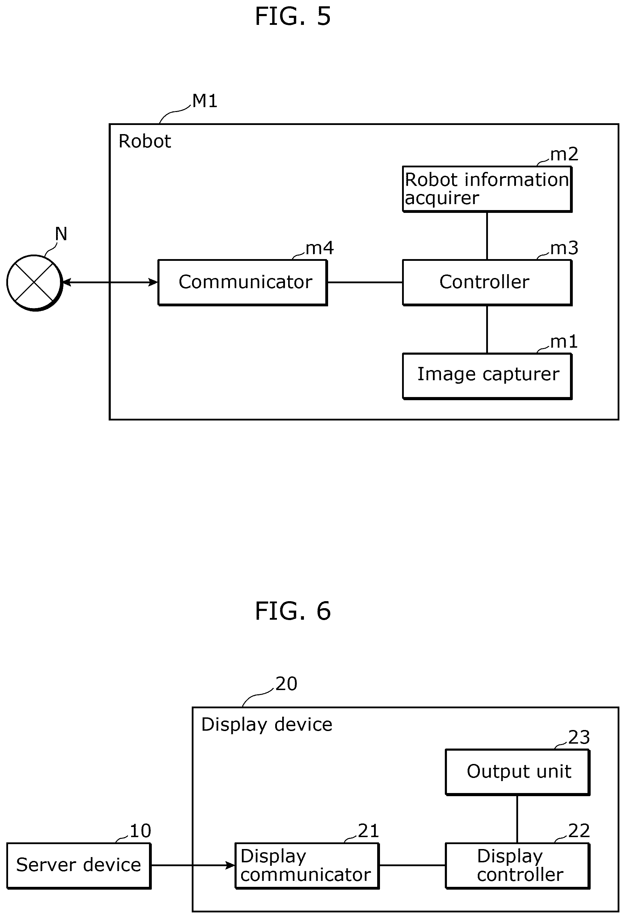

   FIG. 5 is a block diagram showing a configuration of a robot according to the embodiment.
[FIG. 6]
   FIG. 6 is a block diagram showing a configuration of a display device according to the embodiment.
[FIG. 7]

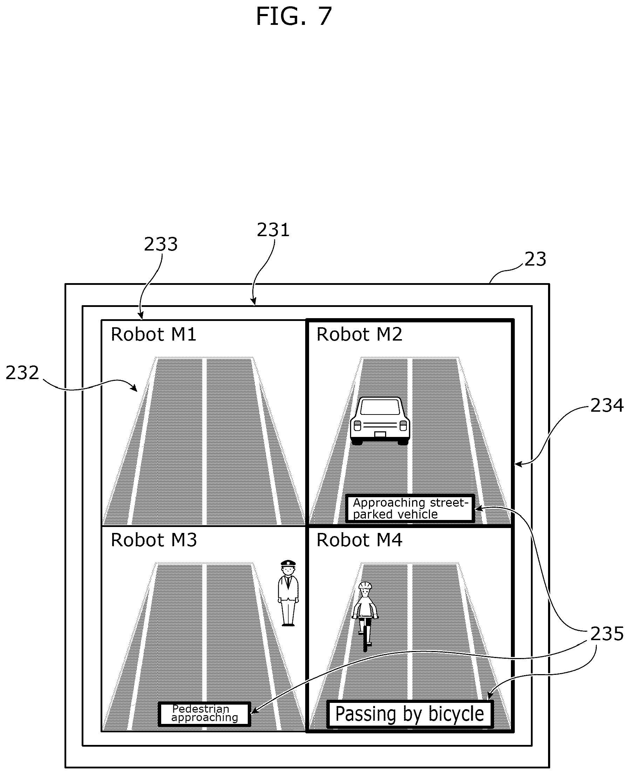

   FIG. 7 is an explanatory diagram showing a first example of a presentation method for presenting presentation information according to the embodiment.
[FIG. 8]

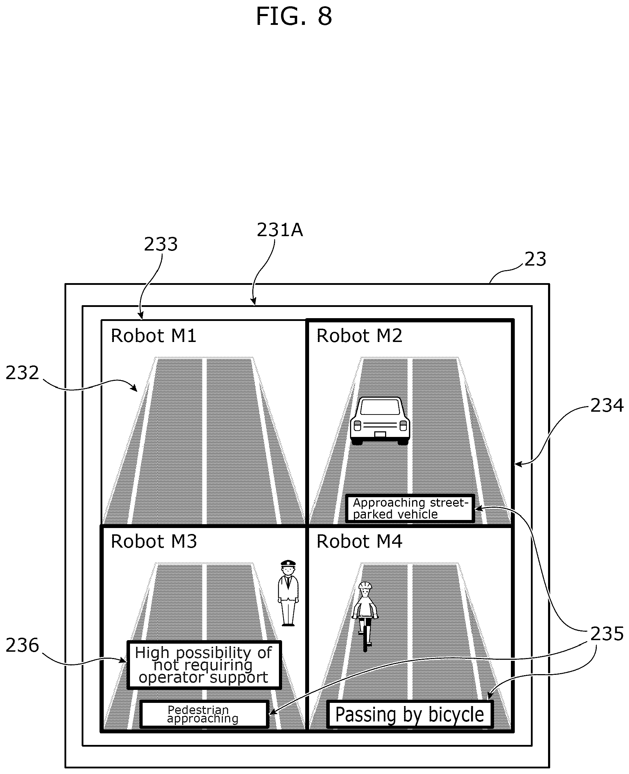

   FIG. 8 is an explanatory diagram showing a second example of the presentation method for presenting the presentation information according to the embodiment.
[FIG. 9]

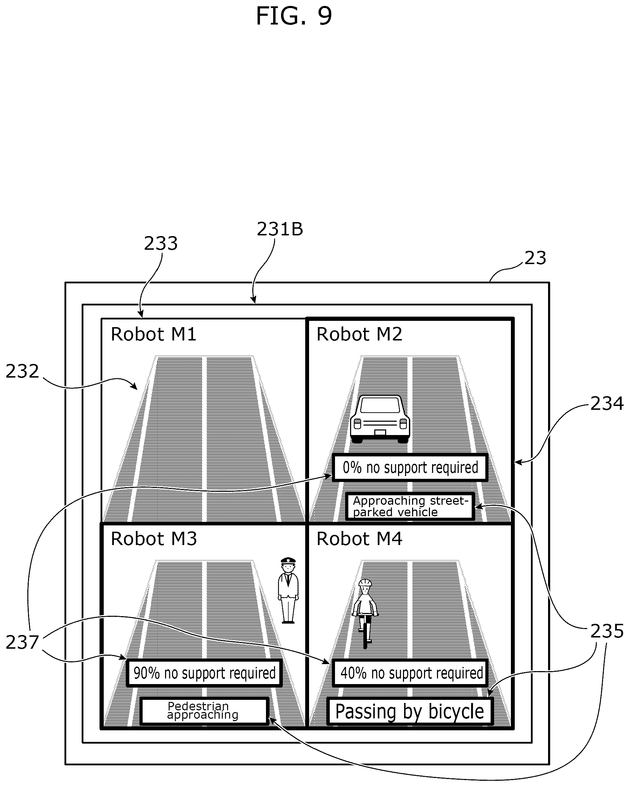

   FIG. 9 is an explanatory diagram showing a third example of the presentation method for presenting the presentation information according to the embodiment.
[FIG. 10]

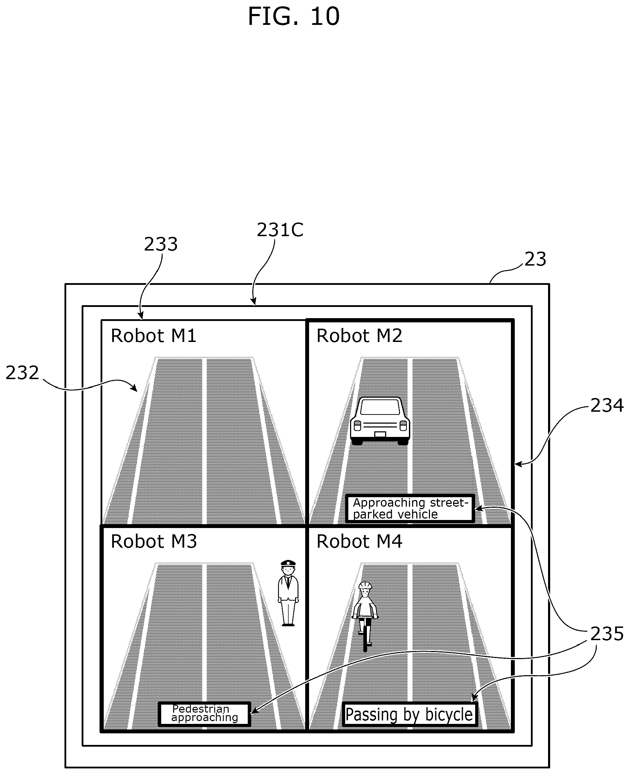

   FIG. 10 is an explanatory diagram showing a fourth example of the presentation method for presenting the presentation information according to the embodiment.
[FIG. 11]

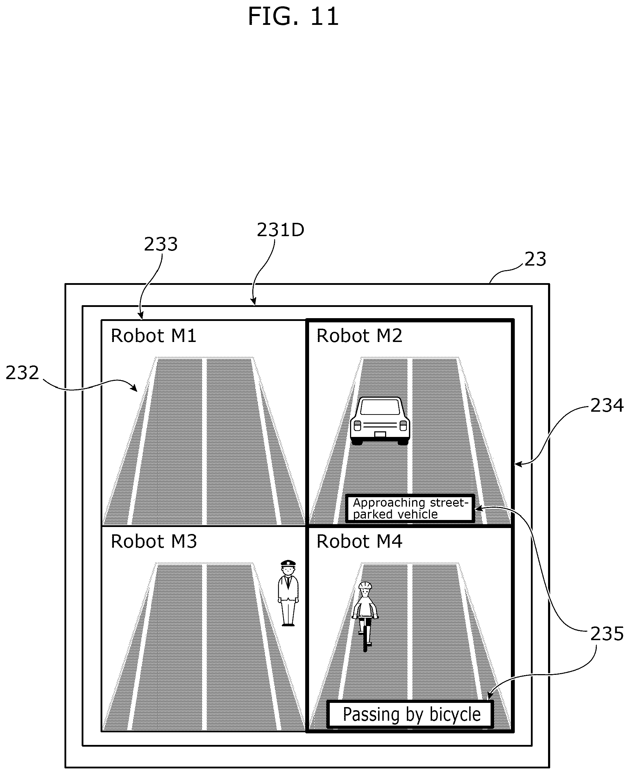

   FIG. 11 is an explanatory diagram showing a fifth example of the presentation method for presenting the presentation information according to the embodiment.
[FIG. 12]

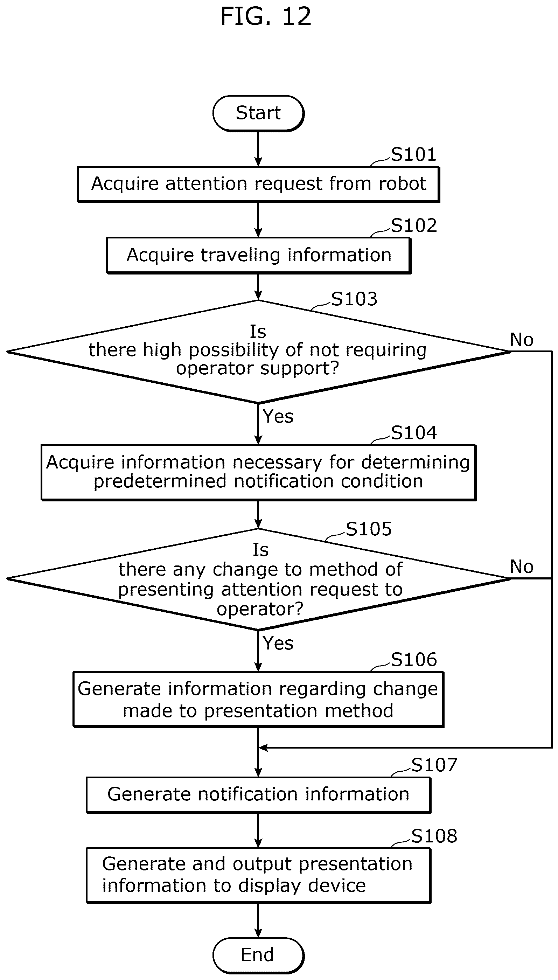

   FIG. 12 is a flowchart showing one example of processing performed within the server device according to the embodiment.
[FIG. 13]

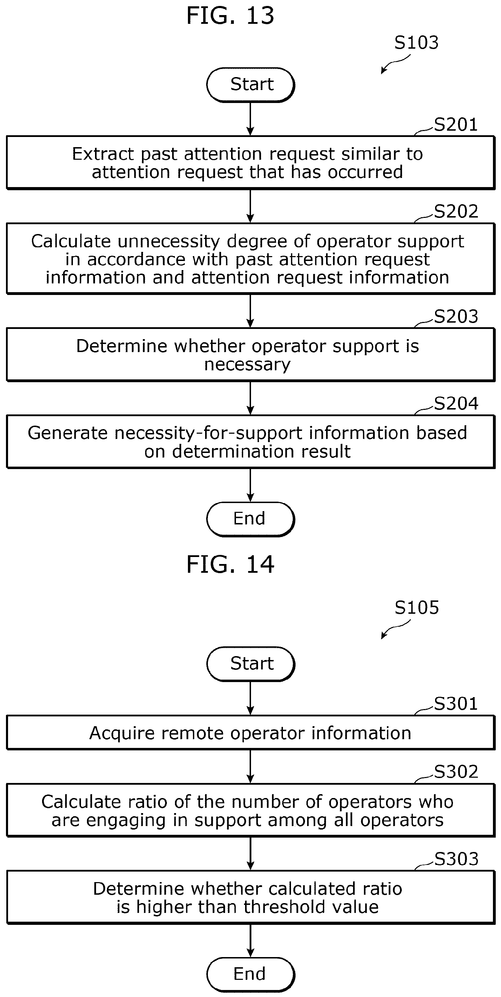

   FIG. 13 is a flowchart showing one example of processing performed by a necessity-for-support determiner according to the embodiment.
[FIG. 14]
   FIG. 14 is a flowchart showing one example of processing performed by a notification controller according to the embodiment.
[FIG. 15]

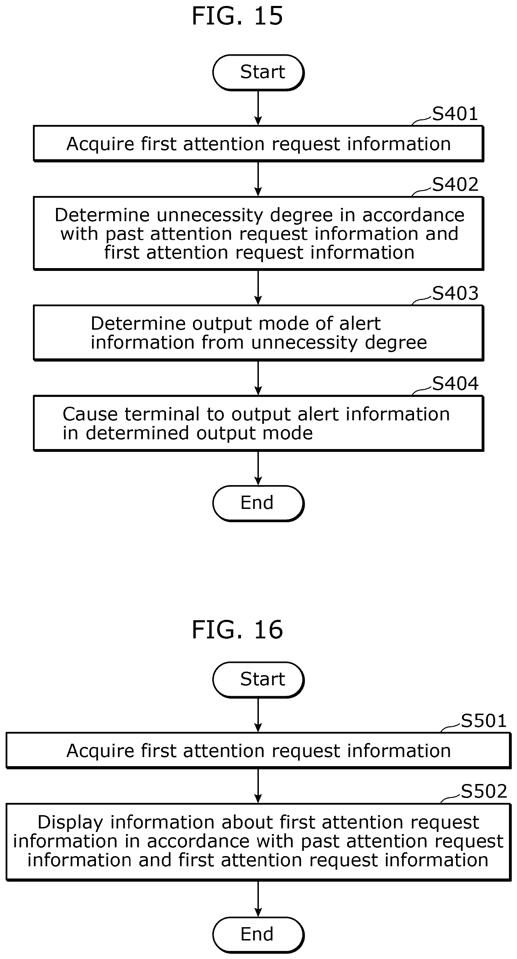

   FIG. 15 is a flowchart showing a procedure of the processing performed by the server device according to the embodiment.
[FIG. 16]
   FIG. 16 is a flowchart showing a procedure of the processing performed by the server device according to the embodiment.

### [Description of Embodiments]

### (Underlying Knowledge Forming Basis of the Present Disclosure)

As described above, when a predetermined event is detected from detection results obtained by various sensors of a robot observing the circumstances around the robot, a conventional remote control system causes the robot to give a notification to an operator via communication means. According to conventional technology as described in PTL 1 described above, if a robot becomes unable to continue unattended operation, the robot notifies an operator of a remote request to require remote operation The operator provides remote assistance based on the notification received from the robot. Thus, operator support such as temporarily stopping the robot is essential to remote requests, and it is expected that notifications will be transmitted when some sort of operator support is required.

In contrast, the present disclosure envisions a system that allows an operator to remotely control a robot at the discretion of the operator in accordance with a notification received from the robot. The operator gives attention to video captured by the robot in accordance with the received notification, grasps conditions of the robot and surrounding conditions of the robot to prevent the robot from becoming an obstruction or nuisance to traffic participants in the vicinity of the robot, determines how to control the robot, and considers the method of controlling the robot. Then, the operator remotely controls the robot by transmitting a control signal related to robot traveling as necessary to the robot. Thus, in such a system that allows the operator to remotely operate a robot at the operator's discretion in accordance with a notification received from the robot, it is expected that notifications will be transmitted from the robot when the robot may get in the way of surrounding traffic participants during unattended operation and become a cause of decreased social acceptance or when a decrease in efficiency can be prevented by remote intervention (remote operation) in advance.

As described above, the robot conventionally provides the operator of a remote request to require remote control when the robot becomes unable to continue unattended operation. Thus, operator support is essential to the remote request, and the operator makes remote intervention based on the notification received from the robot.

On the other hand, according to the present disclosure, an operator is notified of a remote request to require operator attention when a robot may get in the way of surrounding traffic participants during unattended operation and become a cause of decreased social acceptance or when a decrease in efficiency can be prevented by remote intervention (remote operation) in advance. Thus, when the operator does not or cannot provide support in response to the remote request, the robot is capable of autonomous traveling even though the robot may get in the way of traffic participants in the vicinity of the robot or may become a cause of decreased efficiency. Moreover, the robot is provided with an emergency brake that is the function of stopping the robot before collision by detecting objects in the vicinity of the robot by sensors or the like such as a light detection and ranging (LiDAR) sensor provided in the robot. Thus, even if the operator does not or cannot provide support in response to a notification, the emergency brake is activated and the robot stops before an accident such as a collision occurs. Accordingly, no accidents will occur even if the operator does not necessarily provide support or even if social acceptance or efficiency decreases due to the activation of the emergency brake. The operator gives attention to the video captured by the robot in accordance with the notification received from the robot, and determines whether remote operator intervention is necessary and, if remote intervention is necessary, what remote intervention is to be made. That is, according to the present disclosure, unlike conventional technology, operator support in response to notifications is not essential but is recommended. According to the present disclosure, unlike conventional technology, remote intervention is made at the discretion of the operator.

The reasons why remote intervention is made at the discretion of the operator are, for example, because since it is difficult to establish rules for the timing when the robot becomes an obstruction to traffic participants in the vicinity of the robot and the timing when robot traveling efficiency decreases, it will be difficult for the robot to automatically determine such timing and issue a remote request. At this time, the reasons why it is difficult to establish rules for such timing are, for example, because since the timing when the operator should provide support varies depending on the circumstances around the robot, it is difficult for the robot to determine the timing and issue a remote request with appropriate timing. Accordingly, the operator gives attention to the robot in order to determine such timing.

As a specific example of the robot not being able to issue a remote request with appropriate timing at its discretion, there are cases in which the contents of the remote request are "Pedestrian approaching" or "Passing by bicycle". In such cases, the traveling robot can continue unattended operation when passing by a pedestrian or a bicycle, but if the robot continues to travel, the robot may become an obstruction to the pedestrian or the bicycle. Thus, the robot needs to stop as necessary or to speak in order to be heard by the pedestrian or the bicycle. In order for the robot to issue a remote request at its discretion, for example, settings may be made such that the robot can stop and speak with timing when the location of the robot becomes a location that is five meters away from the pedestrian or the bicycle. According to this settings, in the case where a pedestrian or a bicycle is hurriedly running or traveling toward the robot from behind and passing by the robot, the robot stops in a location at a distance of five meters from the pedestrian or the bicycle and may say, for example, "After you". However, it may be too late as the timing of stopping and speaking, and the robot may become an obstruction to the pedestrian or the bicycle in a hurry. In this way, there are some cases where the robot needs to stop and speak sooner (e.g., stop in a location at a distance of 10 meters from the pedestrian or the bicycle). Meanwhile, in cases such as where when a pedestrian is walking toward the robot from behind the robot and passing by the robot and where the robot is passing by a bicycle that is traveling slowly, the robot stops in a location at a distance of five meters from the pedestrian or the bicycle and say "After you", since the walking speed of the pedestrian or the traveling speed of the bicycle is so slow that an ultimate stopping time of the robot may get longer and it may be better for the robot to stop and speak later (e.g., stop in a location at a distance of three meters from the pedestrian or the bicycle) in order to reduce a decrease in robot traveling efficiency.

Moreover, for example, in the case where the contents of the remote request are "Approaching street-parked vehicle", the robot issues a remote request at its discretion. Thus, the robot is set to issue a remote request such that the robot stops with timing when the location of the robot becomes a location at a distance of five meters from the vehicle in order to allow the operator to provide support. At this time, the robot may not be able to avoid the vehicle on the spot depending on the size or parking location of the vehicle. In such a case, it is conceivable that the robot may need to be moved backward to avoid the vehicle. In that case, the operator provides support (performs remote operation) at the operator's discretion so as to avoid the vehicle by stopping the robot in advance at a point where it is easy to avoid the vehicle. This reduces the time required to return to unattended operation and suppresses a decrease in robot traveling efficiency.

In this way, the circumstances around the robot vary depending on location and time, and it is difficult to uniformly set conditions for causing the robot to stop and speak. This prevents the robot from issuing a remote request with appropriate timing and accordingly requires the operator to give attention to the robot and to determine appropriate timing at the operator's discretion.

At this time, although it is difficult for the robot to determine the timing when the robot becomes an obstruction to traffic participants in the vicinity of the robot and the timing that leads to a decrease in robot traveling efficiency, the possibility of occurrence of such timing can be detected by the robot. That is, examples of cases that may require operator support in order not to obstruct traffic participants in the vicinity of the robot and in order to suppress a decrease in robot traveling efficiency include cases where the robot has discovered a distant pedestrian or a bicycle, and there cases can be detected by the robot. Then, with the timing when the robot has detected such cases, a remote request to require operator attention is issued to the operator, and the operator starts to give attention in accordance with that notification. Thereafter, the operator determines whether to provide support, the timing of providing support if any support is provided, and what kind of support is provided.

In this way, in the case of the system that allows the operator to remotely operate the robot at the operator's discretion, the robot transmits a notification as a remote request to require attention when operator support may become necessary. At this time, for example, when the contents of the remote request are "Pedestrian approaching", a notification is transmitted from a robot that has detected a distant pedestrian. As a result of the operator giving attention to the robot in response to the transmitted notification, a case is assumed in which the notification may result in ultimately not requiring operator support, such as a case where there is no risk of collision and the robot has just passed by the pedestrian without becoming an obstruction to the pedestrian. Unlike in the case where the operator is distracted by notifications that result in ultimately nor requiring operator support as described above or in the case where a remote request to require remote operator control is issued only when the robot becomes unable to continue unattended operation as in conventional cases, it is conceivable that the number of notifications will increase enormously if, in order to suppress a decrease in social acceptance or efficiency, the robot issues a remote request to require attention when operator support may be required, including a notification that results in ultimately not requiring operator support. In that case, the load on the operator who checks the notifications and makes determination will increase.

In view of this, the inventors of the present application have found the information processing method and the like capable of reducing the load on the operator.

An embodiment of the present disclosure will be described hereinafter with reference to the drawings.

Note that the embodiment described below illustrates one specific example of the present disclosure. Numerical values, shapes, constituent elements, steps, a sequence of steps, and so on in the following embodiment are merely one example and do not intend to limit the scope of the present disclosure.

Among the constituent elements described in the following embodiment, those that are not recited in any independent claim, which represents the broadest concept, are described as optional constituent elements. It is also possible to combine each of the contents described in the embodiment. The present disclosure also includes various modifications achieved by any combination of constituent elements and functions conceivable by those skilled in the art, without departing from the scope of the present disclosure

In the specification of the present disclosure, ordinal numbers such as "first" and "second" do not refer to the number or sequence of constituent elements, unless otherwise specified, and are used to avoid confusion with the same type of constituent elements and to distinguish them from one another.

### [Embodiment]

An attention-request notification system (hereinafter, also simply referred to as the "notification system") notifies an operator of an attention request when a predetermined event is detected based on a sensing result acquired from a controlled robot via communication means. Based on the transmitted request, the operator grasps conditions of the controlled robot and surrounding conditions of the controlled robot and determines whether the controlled robot requires any support of the operator (hereinafter, also simply referred to as "operator support") such as remote control. Then, in cases such as where the operator has determined that the controlled robot is difficult to continue autonomous traveling or that, if the controlled robot continues to travel autonomously, it will become an obstruction or nuisance to traffic participants in the vicinity of the controlled robot, the operator remotely controls (operates) the controlled robot by transmitting a control signal regarding traveling of the controlled robot to the controlled robot. On the other hand, in cases such as where the operator has determined that there is no problem even if the controlled robot continues its autonomous traveling, the operator just gives attention to the video of the controlled robot and does not operate the controlled robot (i.e., no operator support).

### [Configuration of Notification System]

FIG. 1 is a block diagram showing a configuration of notification system 1 according to the present embodiment.

Notification system 1 shown in FIG. 1 is an information processing system for notifying an operator of an attention request when a predetermined event has been detected by robots M1, M2, ..., and MN (N is an arbitrary natural number) that may be controlled robots.

In the following description, robots M1, M2, ..., and MN are also referred to as "robots M1, etc."

The following description is given of an example in which notification system 1 is an information processing system that notifies an operator of an attention request when a predetermined event has been detected by robots M1, etc.

In the case where notification system 1 notifies an operator of an attention request, there are no particular limitations on the number of robots that detect a predetermined event. For example, notification system 1 may be an information processing system that notifies an operator of an attention request when a predetermined event has been detected by one robot. Alternatively, for example, notification system 1 may be an information processing system that notifies an operator of an attention request when a predetermined event has been detected by any number of robots among a plurality of robots.

The predetermined event as used herein refers to an event that is determined based on information detected by sensors such as cameras mounted on robots M1, etc. The predetermined event may be any event defined in advance, and there are no particular limitations on the predetermined event. Examples of the predetermined event include cases where pedestrians are within a predetermined distance from robots M1, etc. For example, in the case where a pedestrian is within a predetermined distance from robots M1, etc., it is determined that a predetermined event has been detected.

As shown in FIG. 1, notification system 1 includes server device 10, display devices 20a to 20n, and robots M1, etc.

When there is no need to distinguish among display devices 20a to 20h, display device 20a to 20h may also be referred to as display devices 20 in the following description. Also, description of a common configuration of robots M1 to MN may refer to only robot M1.

Server device 10 is a processing device that makes determination about notification given to an operator. Specifically, server device 10 makes determination about notification through information processing executed by a computer, using traveling information obtained, like an attention, from robots M1, etc., information about past attention requests recorded on server device 10, and information about remote operators recorded on server device 10. In the present disclosure, server device 10 determines whether each attention request acquired from robots M1, etc. is an attention request that may not require operator support, in accordance with traveling information acquired, like the attention request, from robots M1, etc. and information about past attention requests recorded on server device 10. When it is determined that operator support may become unnecessary, server device 10 determines whether a predetermined notification condition is satisfied based on the traveling information acquired from robots M1, etc. and the information about remote operators recorded on server device 10. When the predetermined notification condition is satisfied, server device 10 generates and outputs presentation information that is for use in presenting the acquired attention request to an operator. Details thereof will be described later.

Note that the predetermined notification condition may be determined arbitrarily in advance, and there are no particular limitations on the predetermined notification condition. For example, in the case where a predetermined event has been detected, it is determined that the predetermined notification condition is satisfied.

Server device 10 is installed in a location where the server device can be communicatively connected to network N, and the physical location of the server device may be anywhere. By way of example, if server device 10 is arranged within the same room as display devices 20 or in the vicinity thereof, there is an advantage of short-time communication between server device 10 and display devices 20.

Display devices 20 are devices that acquire the presentation information from server device 10 and output the presentation information as images. The images may include, for example, photographs, illustrations, or characters. Display devices 20 may, for example, be liquid crystal displays. Images output from (displayed on) display devices 20 are visually recognized used by an operator to determine whether to monitor robots M1, etc., which robots M1, etc. are to be monitored, and how to monitor robots M1, etc.

Note that display device 20 are one example of a presentation device. In addition to or instead of display devices 20, notification system 1 may further include a device that outputs sound as a presentation device.

Notification system 1 may further include a device such as a projector that displays the presentation information on a target object (e.g., screen) as a presentation device. In the case where server device 10 is located in a remote location from display devices 20, display devices 20 and server device 10 may be connected to one another via network N.

Robot M1 can be a target to be controlled by an operator. Robot M1 exists in an external space, such as on a road or sidewalk, that is different from an interior space in which display devices 20 are located.

Examples of the target to be controlled by an operator (in the present embodiment, robots M1, etc.) include mobile bodies that move autonomously, such as self-operating vehicles or drones. That is, robots M1, etc. may be self-operating vehicles, drones, or any other mobile bodies that move autonomously.

Robot M1 includes a communication interface, is connected to network N through communication, and is connected to server device 10 for communication via network N. Robot M1 includes one or more cameras that capture the circumstances around robot M1, and a plurality of sensors that detect information about robot M1, such as velocity, acceleration, jerk, and steering angle, residual fuel amount, operating state of a winker, the presence or absence, number, and type of surrounding objects, distances to surrounding objects, differences in velocity and acceleration, and current location of the robot. Robot M1 transmits information that includes image data generated by image capture by the one or more cameras and sensing data acquired by the sensors, such as the speed of robot M1 and the presence or absence of surrounding objects to server device 10 via the communication interface and network N.

Note that the aforementioned information transmitted from robot M1 is also referred to as traveling information. The type of the aforementioned variety of information transmitted as the traveling information is also referred to as the type of traveling information. That is, the traveling information itself may be of a plurality of types.

The traveling information may further include, for example, error information that includes life-and-death information indicating whether the sensors of robot M1 are working, and information about system errors of robot M1 itself. In the case where robot M1 has map information stored therein, the traveling information may further include information about a route set by robot M1 and road information about the circumstances around a traveling location. In the case where robot M1 has time information stored therein, the traveling information may further include time information about current time when robot M1 is traveling, and a time when the robot passes a predetermined traveling location.

When a predetermined event that may cause problems in continuing autonomous traveling has been detected based on the traveling information, robot M1 transmits an attention request (information) for notifying an operator of that fact to server device 10 via the communication interface and network N. The above attention request may include, for example, information based on data obtained by the sensors of robot M1. The attention request may further include, for example, information about surrounding traffic participants such as pedestrians and other people who are in the vicinity of robot M1 when the attention request has occurred, information about the type of the attention request that indicates the type of the predetermined event that has caused the attention request, the period during which the operator gives attention to the robot, and information about the traveling area of robot M1. The attention request may further include information about a target to be given attention to by an operator, such as an object that has caused the attention request or the area where the object is present.

Robots M2 to MN each move independently of robot M1. Each of robots M2 to MN also transmits image data and sensing data generated by the robot itself to server device 10 in the same manner as robot M1.

Note that robots M2 to MN may be similar to robot M1 or may be of a different type from robot M1, or all robots M1 to MN may be of different types.

Network N is a communication network connected to each of server device 10 and robots M1, etc. Communication standards or method of network N may, for example, be a mobile phone network, a satellite communication network, or a wide-area communication network using Wi-Fi (registered trademark), but are not limited thereto. The communication interfaces of robots M1, etc. are wireless communication interfaces such as antennas and wireless communication circuits for wireless communication with server device 10 via network N.

There may be a plurality of operators, and the number of operators may be smaller than the number of robots M1, etc. The operators do not always give attention to all of robots M1, etc. The operators select and give attention to only those robots that are determined to require attention, and provide support (operator support) as necessary. The operator support may refer to, for example, operation or control such as remote operation of robots and press of a speech button for calling out to surrounding traffic participants. At this time, it is expected that the operators do not given attention to robots other than supported robots. This brings about advantages such as reducing the number of operators required and allowing the operators to concentrate on the robots that require attention and/or support.

Examples of the case determined that attention is required include cases where robots M1, etc. are in dangerous locations, cases where robots M1, etc. are in dangerous conditions, cases where robots M1, etc. are approaching dangerous locations, cases where robots M1, etc. are predicted to become unsafe, and cases where robots M1, etc. may become obstructions or nuisances to surrounding traffic participants.

Note that the number of operators may be one, or may be the same as the number of robots M1, etc. In the present embodiment, there are a plurality of operators, and description is given of one operator among them.

The operator views images presented by display device 20 and determines which robot to given attention to among robots M1, etc. and, as necessary, how to provide support. For example, display device 20 may present images or the like generated by one or more cameras capturing images of circumstances around robots M1, M2, ..., and MN each of which could be a robot to be controlled.

Hereinafter, detailed description is given of processing performed by server device 10 when generating information for presenting, to the operator, which robot is to be given attention to. In accordance with the information presented by display device 20, the operator determines which robot to give attention to among robots M1, etc. and, as necessary, provides support. Server device 10 properly presents, to the operator, the robot that requires operator support among robots M1, etc. in an easy-to-notice manner. This will reduce the load on the operator such as the operation of searching for a robot that requires support from among robots M1, etc. and a burden of being distracted by robots that do not require operator support.

FIG. 2 is a block diagram showing a functional configuration of server device 10 according to the present embodiment.

As shown in FIG. 2, server device 10 includes on-traveling information acquirer 11, pre-driving attention request database (DB) 12, remote operator DB 13, necessity-for-support determiner 14, notification controller 15, and alert output unit 16. Server device 10 is a computer capable of communication with robots M1 to MN and display devices 20a to 20n. Server device 10 is one example of an information processing device.

On-traveling information acquirer 11 is a communication interface that is connected to network N and that is also connected to robots M1, etc. for communication via network N. On-traveling information acquirer 11 acquires the traveling information and attention request information (also simply referred to as the attention request) from robots M1, etc. On-traveling information acquirer 11 is one example of an acquirer.

The traveling information is information about robots M1, etc. For example, the traveling information may include information based on data obtained by a plurality of sensors of robots M1, etc. The traveling information may also include, for example, information about vehicle numbers of robots M1, etc., current time, traveling locations of robots M1, etc., road conditions around robots M1, etc., conditions of traffic participants in the vicinity of robots M1, etc., and image data obtained by one or more cameras mounted on robots M1, etc.

The attention request information refers to information that allows the operator to give attention to a target robot and provide support as necessary via a plurality of sensors of robots M1, etc. For example, the attention request information may include information about the place where the attention request has occurred (i.e., the place from which the attention request information has been transmitted), the time when the attention request has occurred, conditions of traffic participants in the vicinity of robots M1, etc. when the attention request has occurred, road conditions in the vicinity of robots M1, etc. when the attention request has occurred, and the type of the attention request that represents the cause of occurrence of the attention request.

Pre-driving attention request DB 12 is a database that stores information for determining whether each attention request that occurs during travel of robots M1, etc. is an attention request that is likely to require operator support. As the information for determining whether each attention request that occurs during travel of robots M1, etc. is an attention request that is likely to require operator support, pre-driving attention request DB 12 stores past attention request information that is information about attention requests that have occurred in the past.

The past attention request information may include, for example, information about the place where each attention request has occurred in the past, the time when each attention request has occurred, conditions of traffic participants in the vicinity of robots M1 and so when each attention request has occurred, road conditions in the vicinity of robots M1, etc. when each attention request has occurred, and the type of each attention request that represents the cause of occurrence of the attention request.

Pre-driving attention request DB 12 stores a table (past attention request table T1; see FIG. 3) that associates the past attention request information and information indicating the presence or absence of operator support provided for robots M1, etc. included in the past attention request information (i.e., information indicating whether the operator has provided support, such as remote operation of robots M1, etc.). The information indicating the presence or absence of operator support may also be included in the past attention request information.

Pre-driving attention request DB 12 may be realized as, for example, a storage device such as flash memory or a hard disk drive (HDD).

Here, past attention request table T1 stored in pre-driving attention request DB 12 is described with reference to FIG. 3.

FIG. 3 is a diagram showing one example of past attention request table T1 stored in pre-driving attention request DB 12 according to the present embodiment.

As shown in FIG. 3, past attention request table T1 is a table that associates the information about attention requests that have occurred in the past (i.e., the past attention request information) and the information indicating the presence or absence of operator support for each type of attention requests.

Here, the information indicating the presence or absence of operator support is information determined by the presence or absence of logs that record operation histories indicating operator operation performed on robots that have made attention requests (i.e., robots that have transmitted attention requests), within a predetermined period of time since the occurrence of the attention requests. For example, if a log exists that records an operation history of operator operation performed on a robot that has made an attention request, it is determined that operator support has been provided, and the information indicating the presence or absence of operator support as "Yes" is linked to past attention request table T1 and stored in pre-driving attention request DB 12. On the other hand, for example, in the case where no log exists that records an operation history of operator operation performed on a robot that has made an attention request, it is determined that operator support has not been provided, and the information indicating the presence or absence of operator support as "No" is linked to past attention request table T1 and stored in pre-driving attention request DB 12.

Note that camera video of the operator taken by cameras may also be used together to determine the presence or absence of operator support. In this case, if the operator was taking some action for support, it is possible to properly determine the presence or absence or operator support even if no log remains that records an operation history of operator operation performed on a robot that has made an attention request.

For example, a case is conceivable in which, when an attention request that represents the presence of a pedestrian approaching (e.g., "Pedestrian approaching" in FIG. 3) has occurred, the operator had attempted to make the target robot speak in order to inform nearby passengers that the robot continues to travel, but the pedestrian supposed to be spoken by the robot had already passed by and the speech was not delivered in time. In such a case, no log remains because the operator had not operated the robot itself. However, the operator may had moved to operate a touch panel or the like in order to operate the robot. In such a case, it may be determined that there was operator support, and this may be set in past attention request table T1.

In the case where the camera video of the operator taken by the cameras shows that no attention request has occurred but the operator is taking some action for support, server device 10 may, based on that action, use the traveling information, such as the traveling location of a robot at that time, the conditions of traffic participants in the vicinity of the robot, and road conditions in the vicinity of the robot, as a substitute for the information about an attention request.

Conceivable examples of operator support include not only the one that affects safety improvement depending type, such as "pedestrian approaching" or "passing by bicycle", but also the one provided for the purpose of, for example, improving efficiency or social acceptance. Thus, the information indicating the presence or absence of operator support may include not only the presence or absence of operator support but also information about the type. For example, a threshold value for changing the mode of display when the attention request does not require operator support may be set for each type. For example, threshold values for types that affect important safety improvement, among a plurality of types, may be set to be higher than threshold values for the other type, and the mode of display may be determined such that, even if an attention request does not require operator support, the attention request may be displayed as an alert so that the operator can easily notice.

The past attention request information may, for example, be information that indicates predetermined events or the like that led to the occurrence of attention requests. For example, the past attention request information may include information indicating type, information indicating time, information indicating place, information indicating road conditions, and information indicating conditions of traffic participants.

The information indicating type ("Type" shown in FIG. 3) is information indicating each detected predetermined event such as "Pedestrian approaching" or "Passing by bicycle".

The information indicating time ("Occurrence time" shown in FIG. 3) is information indicating the time when each predetermined event has occurred.

The information indicating place ("Occurrence Place" shown in FIG. 3) is information indicating the place where each predetermined event has occurred. The information indicating place may, for example, be information indicating coordinates such as (425, 370) on a predetermined map stored in the storage device of server device 10.

The information indicating road conditions ("Road condition" shown in FIG. 3) is information indicating conditions of roads in the place where each predetermined event has occurred, such as the presence or absence of a pedestrian crossing or the presence or absence of a signal.

The information indicating conditions of traffic participants ("Traffic participant condition" shown in FIG. 3) is information indicating the presence or absence of traffic participants who are passersby such as pedestrians or bicycle riders passing through the place where each predetermined event has occurred. For example, "Bicycle 1" shown in FIG. 3 indicates that there is one bicycle river (a passerby riding on a bicycle) in the place where the predetermined event has occurred, and "Pedestrian 2" shown in FIG. 3 indicates that there are two pedestrians in the place where the predetermined event has occurred.

Note that the past attention request information may include information about importance and/or urgency of the attention requests. For example, importance may refer to information determined based on the frequency of operator support or the like for each type of the attention requests. For example, urgency may refer to information determined based on the time to operator action or the like after the occurrence of each attention request.

The past attention request information may further include weather information. Cases are also conceivable in which the degree of unnecessity, which will be described later, may vary depending on whether. Thus, if the weather information is included in the past attention request information, it is possible to take weather conditions into consideration by extracting and using past attention request information that matches weather to determine whether operator support is necessary.

Referring back to FIG. 2, remote operator DB 13 is a database that stores remote operator information.

The remote operator information is information indicating whether the operator is currently providing support or operation for robots M1, etc. Remote operator DB 13 stores, as the remote operator information, a table (operator table T2; see FIG. 4) that associates information about each operator and information indicating whether the operator is currently providing support for robots M1, etc.

Remote operator DB 13 may be realized as, for example, a storage device such as flash memory or an HDD.

Note that pre-driving attention request DB 12 and remote operator DB 13 may be realized as one storage device, or may be realized as different storage devices.

Here, operator table T2 stored in remote operator DB 13 is described with reference to FIG. 4.

FIG. 4 is a diagram showing one example of operator table T2 stored in remote operator DB 13 according to the present embodiment.

Operator table T2 is a table that associates, for every operator, information about the operator and information indicating whether the operator is currently providing support for robots M1, etc. For example, operator table T2 may also include information about operators who are not engaging in support. As shown in FIG. 4, operator table T2 is a table that associates information about each operator, information about action of the operator, and information indicating a support status corresponding to the action of the operator.

Here, as the action of the operator, "Attention" means that a remote operator gives attention to one robot so as to focus on the robot. The term "In support" as used herein refers to a situation in which a remote operator focuses on one robot for support, such as remotely operating the robot or pressing a speech button. Thus, for example, a situation in which a remote operator always monitors a plurality of robots is not included in "Attention" and "In support".

The information about operators is information that uniquely indicates each of a plurality of operators. For example, the information about the operator may be an ID that is uniquely defined for each operator ("Operator ID" shown in FIG. 4). Although, in the example shown in FIG. 4, A, B, C , or the like is set as the information about the operator, the information about the operator may be indicated by, for example, numbers or names and there are no particular limitations on the information about the operator.

Here, the information about the operator may include information indicating operator's proficiency. For example, the information indicating operator's proficiency may be determined based on the number of times the operator has performed the task.

The information about operator action is information indicating action taken by the operator on the attention request occurred ("Operator action" shown in FIG. 4). For example, "Touch panel operation "shown in FIG. 4 refers to information indicating that the operator is currently engaging in remote operation using a touch panel, which is determined based on captured camera video of the operator. For example, "Touch panel operation" may be detected when the operator is reaching for the touch panel in the camera video of the operator.

The information indicating the support status is information defined according to the action of the operator ("Support status" shown in FIG. 4). For example, in the case where the operator is operating robots M1, etc. via a manipulator (not shown) such as a touch panel, a remote controller, or a transceiver, the information indicating the support status as "In support" is linked to operator table T2 and stored in remote operator DB 13. On the other hand, for example, in the case where the operator gives attention to display device 20 without operating the aforementioned manipulator, i.e., without operating robots M1, etc., the information indicating the support status as "Not in support" is linked to operator table T2 and stored in remote operator DB 13.

Referring back to FIG. 2, necessity-for-support determiner 14 is a processing unit that determines whether the attention request occurred requires operator support. Necessity-for-support determiner 14 acquires, from on-traveling information acquirer 11, the traveling information and the attention request information that are transmitted from robots M1, etc. and acquires the past attention request information from pre-driving attention request DB 12. Then, necessity-for-support determiner 14 determines whether the attention request occurred requires operator support in accordance with the traveling information, the attention request information, and the past attention request information that have been acquired, and generates necessity-for-support information as a determination result. More specifically, the necessity-for-support information is information for determining (identifying) whether the attention request occurred requires operator support.

The necessity-for-support information includes information for identifying whether the attention request occurred requires operator support. For example, the necessity-for-support information may include information indicating the degree to which each attention request occurred in each robot requires operator support. The way of obtaining the degree to which operator support becomes necessary will be described later.

In the case where an attention request has occurred in each of a plurality of robots, there is no need to prompt the operator to give priority to one of the robots for attention by comparing the attention requests that have occurred. The necessity-for-support information may include information indicating the degree to which operator support becomes unnecessary. Necessity-for-support determiner 14 may determine (judges) whether the attention request occurred requires operator support, in accordance with at least the traveling information, the attention request information, and the past attention request information.

Notification controller 15 is a processing unit that determines whether a predetermined notification condition is satisfied, in accordance with the necessity-for-support information generated by necessity-for-support determiner 14 and the remote operator information acquired from remote operator DB 13. Based on the determination result, notification controller 15 determines whether to notify an alert (alert information) to the operator in response to the attention request occurred and, when to notify, generates notification information. For example, when it is determined to notify the operator, notification controller 15 generates notification information indicating a robot that is to be given attention to by the operator and receive support as necessary. Notification controller 15 provides alert output unit 16 with the generated notification information.

The notification information generated by notification controller 15 includes information for identifying a robot that is to be given attention to by the operator and receive support as necessary, and information about the method of presenting alerts based on whether operator support is necessary, which is determined based on the necessity-for-support information and the remote operator information.

The notification information may further include information indicating the reason for having determined a robot that is to be given attention to by the operator and receive support as necessary.

The notification information may further include, for example, information indicating which type of attention request has been detected from the information about the types of a plurality of attention requests shown in FIG. 3. The notification information may further include, as the information about whether operator support is necessary, information indicating the degree to which operator support becomes unnecessary.

Alert output unit 16 is a processing unit that outputs an alert to be displayed on display device 20. For example, alert output unit 16 may generate presentation information that includes image data on the alert to be displayed on display device 20 via a communication interface (not shown) of server device 10, and outputs the presentation information to display device 20.

Note that server device 10 may be connected to display devices 20 for wireless communication, or may be connected to display devices 20 for cable communication. For example, the communication interface of server device 10 may be realized as a connector or the like connected to a communication line, or may be realized as a wireless communication circuit or the like for wireless communication.

The presentation information output from alert output unit 16 includes image data that on-traveling information acquirer 11 has acquired from robots M1, etc. Alert output unit 16 changes the method of presenting alerts in accordance with the notification information received from notification controller 15 and outputs the changed alert as the presentation information, together with the image data, to display device 20 via the communication interface of server device 10.

Note that the presentation information may include information indicating a robot that is to be given attention to by the operator and receive support as necessary, indicated by the notification information. In the case where the notification information includes information indicating one or more robots that are to be given attention to, the presentation information may include information indicating the type of attention requests that have occurred in the one or more robots included in the notification information, information indicating the degree to which operator support becomes unnecessary, and information indicating that there is a high possibility that operation action may become unnecessary.

For example, a case is conceivable in which each robot is monitored by a plurality of operators, such as operators 1 and 2 always monitor robot A, operators 3 and 4 always monitor robot B, operators 1 and 3 always monitor robot C, and operators 2 and 4 always monitor robot D. A case is also conceivable in which some robots are each monitored by a plurality of operators, such as operators 1 and 2 always monitor robot A, operator 1 always monitor robot B, and operator 2 always monitor robot C. A case is also conceivable in which a plurality of operators monitor different robots. Here, since the destination to which a required varies depending on each case, processing for determining the destination to which an alert is output may be performed. For example, the destination to which an alert is output may be determined in accordance with, for example, the status of the operator (e.g., whether the operator is taking any action other than constant monitoring), and information about the operator (e.g., operator history and proficiency).

Note that the destination to which an alert is output is basically the terminal (display device 20) of the operator who is in charge of robot monitoring.

For example, in the case where one robot is monitored by a plurality of operators, the mode of display may be determined such that the terminals of the operators are all made to appear the same. In the case where one robot is monitored by a plurality of operators, the mode of display may also be determined, based on the status of the operator and the information about the operator, such that the alert is displayed inconspicuously on the terminals of heavy loaded operators. In this way, in the case where there are a plurality of destinations to which the alert is output, the mode of display of the alert may be determined (changed) depending on the destination of output.

Necessity-for-support determiner 14, notification controller 15, and alert output unit 16 may by realized by, for example, a processor and memory that stores control programs to be executed by the processor.

FIG. 5 is a block diagram showing a functional configuration of robot M1 according to the present embodiment.

As shown in FIG. 5, robot M1 includes image capturer m1, robot information acquirer m2, controller m3, and communicator m4. Robot M1 is capable of autonomous traveling in accordance with, for example, traveling data generated based on map information held in advance in robot M1, traveling data, and information detected by image capturer m1 and the like. In the present embodiment, robot M1 is a self-operating vehicle that is capable of unattended operation and that is remotely operated by an operator who is in a remote location under a predetermined condition. Robot M1 is one example of a mobile body.

Image capturer m1 is a camera that captures an image of the circumstances around robot M1. For example, image capturer m1 may be provided in a location capable of image capture in front, rear, left, and right directions from robot M1. Image capturer m1 is provided in robot M1. Image capturer m1 may be configured as a single camera or by a plurality of cameras. Image capturer m1 may also be a camera provided in a drive recorder. Alternatively, a plurality of image capturers m1 may be provided in robot M1.

Robot information acquirer m2 is a control device that acquires information (robot information) about traveling of robot M1 from various sensors mounted on robot M1 via a network such as a control area network (CAN). The various sensors include a speed sensor that detects the speed of robot M1 and a global positioning system (GPS) sensor that detects the current location of robot M1. Robot information acquirer m2 acquires the speed of robot M1 from the speed sensor and acquires the current location of robot M1 from the GPS sensor.

Note that the various sensors may also include, for example, a steering angle sensor that detects the steering angle of robot M1, a brake sensor that detects the degree of a brake, an accelerator sensor that detects the degree of acceleration (accelerator opening), and a winker sensor that detects the direction indicated by a winker.

Controller m3 is a control device that controls various constituent elements of robot M1. In the present embodiment, controller m3 transmits robot information and sensing information to server device 10 via communicator m4, the robot information being acquired via robot information acquirer m2 and including a vehicle number that represents the type of robot M1 and the speed and current location of robot M, the sensing information being information about robot M1 and obtained from image capturer m1 (specifically, video information obtained from the result of image capture by image capturer m1).

Note that the information arbitrarily defined in advance, such as the information indicating the vehicle number representing the type of robot M1, may be acquired from server device 10 via communicator m4, or may be stored in a storage device of robot M1 such as an HDD and acquired from the storage device.

Controller m3 may, for example, detect obstacles abound robot M1 in accordance with the sensing information obtained from image capturer m1 and generate obstacle information.

The obstacle information may include, for example, information about at least one of the current locations of obstacles, the speeds of obstacles, the accelerations of obstacles, the travel directions of obstacles, the sizes of obstacles, and the types of obstacles. For example, the types of obstacles may be types to distinguish obstacles such as pedestrians, motorbikes, and automobiles. The current locations of obstacles indicates the locations of obstacles at the times when the obstacles have been detected.

Controller m3 also determines whether to issue an attention request in accordance with the generated obstacle information and the robot information acquired via robot information acquirer m2 and generates attention request information that includes, for example, the obstacle information, the robot information, and information about the type of the attention request. For example, the type of the attention request indicated by the attention request information may refer to the type to distinguish the cause of occurrence of the attention request such as "Pedestrian approaching" or "Approaching street-parked vehicle" shown in FIG. 3.

For example, "Approaching street-parked vehicle (or vehicle parked on street)" refers to an attention request indicating that a street-parked vehicle (i.e., vehicle) is parked along the traveling route of robot M1, so the robot may not be able to travel as it is.

Note that the attention request may also be defined arbitrarily in any manner other than the example shown in FIG. 3.

Controller m3 generates video information about the circumstances around robot M1 in accordance with the sensing information obtained from image capturer m1. Controller m3 may generate video information individually for each of the front, rear, left, and right directions of robot M1, or may combine individual items of video information into a single item of video information.

Controller m3 may have a real-time clock function that calculates time ranging from seconds to years. Alternatively, controller m3 may use the time specified based on a GPS signal as an accurate GPS time, the GPS signal being a signal received from a GPS satellite and acquired via communicator m4. For example, controller m3 may receive a GPS signal at predetermined time intervals.

Robot information acquirer m2 and the control devices such as controller m3 may be realized by, for example, a processor and memory that stores control programs to be executed by the processor.

Communicator m4 is a wireless communication module for wireless communication with server device 10 via network N. Under the control of controller m3, communicator m4 transmits the traveling information and the attention request information based on the obstacle information to server device 10 via network N, the travel information including, for example, the map information held in advance by robot M1, the robot information, the video information, and the time information.

Note that each of robots M2 to MN may have, for example, a configuration similar to the configuration of robot M1.

FIG. 6 is a block diagram showing a functional configuration of display device 20 according to the present embodiment. Note that display device 20 is substantially the same in configuration as each of display devices 20a to 20n shown in FIG. 1.

As shown in FIG. 6, display device 20 includes display communicator 21, display controller 22, and output unit 23. Display device 20 may, for example, be a device that displays information indicating conditions of robots M1, etc. and the presentation information that includes, for example, the video information indicating the circumstances around robots M1, etc. For example, display device 20 may be realized as a liquid crystal display or an organic electro luminescence (EL) display.

Display communicator 21 is a communication interface for acquiring the presentation information from server device 10 through communication with server device 10.

Note that display communicator 21 may be connected to server device 10 for cable transmission, or may be connected thereto for wireless communication. For example, display communicator 21 may be realized as a connector or the like connected to a communication line, or may be realized as a wireless communication circuit or the like for wireless communication.

Display controller 22 is a processing unit that controls the method of presenting information indicating the conditions of robots M1, etc. and the video information indicating the circumstances around robots M1, etc. in accordance with the presentation information received via display communicator 21. For example, display controller 22 may be realized by a processor and memory that stores control programs to be executed by the processor.

Output unit 23 is a display that outputs the video information indicating the conditions of robot M1 and the circumstances around robots M1, etc. under the control of display controller 22. Specifically, under the control of display controller 22, output unit 23 displays video of robots M1, etc. and the circumstances around robots M1, etc..

### [Specific Examples of Presentation]

Next description is given of specific examples of the method of presenting the presentation information displayed on display device 20.

FIG. 7 is an explanatory diagram showing a first example of the method of presenting the presentation information according to the present embodiment.

FIG. 7 shows an example in which four robots M1 to M4 are being monitored by one of a plurality of operators (specifically, an example in which one operator is giving attention to or supporting robots M1 to M4 as necessary). During normal operation (specifically, when no attention requests occur), output unit 23 displays image data (video information) acquired from each of robots M1 to M4 in accordance with the presentation information.

FIG. 7 also shows an example in which, when an attention request that is likely to require operator support has occurred, an alert is presented as the presentation information, in addition to the image data acquired from each of robots M1 to M4, the alert having an output mode (presentation mode) determined based on the type of the attention request occurred that is likely to require operator support.

In FIG. 7, among the image data about robots that have issued an attention request (e.g., the video information obtained from these robots), image data with a low degree of not requiring operator support is shown with a thick frame. Such image data is also displayed with an image superimposed thereon, the image indicating the type of the attention request and being highlighted and made conspicuous by increasing the size of characters included in the image.

On the other hand, among the image data about the robots that have issued an attention request in FIG. 7, image data with a high degree of not requiring operator support is shown with neither a thick frame nor image 234. Such image data is also displayed with an image superimposed thereon, the image indicating the type of the attention request and being made inconspicuous by reducing the size of characters included in the image.

Thick lines are one example of the alert displayed on display device 20. The images including characters that indicate attention requests such as "Approaching street-parked vehicle", "Passing by bicycle", and "Pedestrian approaching" are one example of the alert.

As shown in FIG. 7, image 231 that display device 20 displays on output unit 23 includes images 232, 233, 234, and 235.

Images 232 correspond to image data that is based on image data obtained by image capture by the one or more cameras mounted on robots M1, etc.

Images 233 correspond to image data for identifying which robot each image data included in images 232 relates to. In the example shown in FIG. 7, images 233 correspond to image data that includes character strings such as "Robot M1", "Robot M2", "Robot M3", and "Robot M4".

Images 234 correspond to image data indicating images 232 that correspond to robots that have issued an attention request with a low degree of not requiring operator support. In the example shown in FIG. 7, images 234 are indicated with thick frames.

Images 235 correspond to image data that is superimposed and displayed on images related to robots that have issued an attention request, the image data indicating the type of the attention request whose presentation mode is changed depending on the degree to which operator support to be provided at the attention request occurred becomes unnecessary. In the example shown in FIG. 7, images 235 correspond to image data that includes character strings such as "Approaching street-parked vehicle", "Passing by bicycle", and "Pedestrian approaching".

In this way, for example, alert output unit 16 may cause output unit 23 of display device 20 to present image 231 that includes the image data (images 232) obtained by each of robots M1, etc., the information (images 233) that indicates which robot each image data relates to, and the image data (images 234 and 235) that indicates the type of each attention request whose presentation mode is changed depending on the degree to which operator support becomes unnecessary. Specifically, alert output unit 16 determines whether to add thick lines to the video information and determines the output mode (in the present embodiment, the display mode) for alert such as the size of characters indicating the type of the contents of each attention request such as "Approaching street-parked vehicle" on the basis of the degree to which operator support to be provided at the attention request becomes unnecessary. Display controller 22 causes output unit 23 to output (present) an alert in the output mode determined by alert output unit 16 in accordance with the presentation information acquired via display communicator 21. Specifically, display controller 22 causes output unit 23 to superimpose and display an alert on the video information acquired from robots M1, etc. in that output mode.

In the present example, the degree to which operator support becomes unnecessary is indicated by the size of images 235 (more specifically, the size of characters included in images 235), but this degree may be indicated by, for example, the contrast of images 235.

Robot M2 may have issued, for example, "Approaching street-parked vehicle" as an attention request. This attention request may, for example, have a low degree of not requiring operator support. Thus, image 235 that indicates this attention request is displayed dark. In this way, image 235 indicating this attention request is displayed with high contrast.

Robot M3 may have issued, for example, "Pedestrian approaching" as an attention request. This attention request may, for example, have a high degree of not requiring operator support. Thus, image 235 that indicates this attention request is displayed light.

In this way, for example, alert output unit 16 may determine the contrast of the alert information in the case of causing output unit 23 to output the alert information, in accordance with the degree to which operator support to be provided at the attention request becomes unnecessary.

Note that the type and degree of unnecessity of the attention request may be determined arbitrarily in advance.

Moreover, for example, image 231 may include images 234 serving as frames surrounding images 232 in order to emphasize the occurrence of attention requests with a low degree of not requiring operator support.

The presentation method as described above allows the operator to easily notice, from among video information about every robot, video information about robots that require operator support or that are relatively highly likely to require operator support. Thus, the operator can quickly determine whether operator support is necessary.

Alternatively, the above-described display mode for display (alert) may be dynamically changed according to a change in the degree to which operator support becomes unnecessary, the change being associated with an hourly change in the circumstances around robots M1, etc.

The output mode determined by alert output unit 16 is not limited to the example described above and may, for example, be arbitrary such as color, font type, and line thickness. In the case where the alert information is presented by sound, alert output unit 16 may determine a sound volume or the like as the output mode.

To highlight an image presented in the form of an alert, the size of the image may be increased according to the degree of unnecessity. The size of the image may be determined according to an absolute degree of unnecessity, or may be determined according to a relative degree of unnecessity.

Alternatively, images may be displayed in order of the degree of unnecessity. For example, images may be displayed in the order of ascending degree of unnecessity.

As another alternative, the alert information may be presented not only by simply changing the output mode according to the degree of unnecessity, but also by making inconspicuous the timing of the change in the degree of unnecessity.

This enables the operator to easily recognize the timing of increasing or degreasing attention.

The alert information may also be output when the degree of unnecessity becomes higher than a threshold value or lower than the threshold value.

Moreover, the output mode for the alert information may be made different between when the degree of unnecessity becomes higher than the threshold value and when the degree of unnecessity becomes lower than the threshold value.

The threshold value that is used for the determination as to whether the degree of unnecessity is higher than the threshold value and the threshold value that is used for the determination as to whether the degree of unnecessity is lower than the threshold value may be the same value, or may be different values.

The alert information may also be output when the degree of unnecessity increases sharply or when the degree of unnecessity decreases sharply.

FIG. 8 is an explanatory diagram showing a second example of the method of presenting the presentation information according to the present embodiment.

FIG. 8 shows an example in which images 232, 233, 234, and 235 shown in FIG. 7 and information indicating that the degree of unnecessity to which operator support becomes unnecessary is high and accordingly there is a high possibility that operator support may become unnecessary are presented as the presentation information.

In FIG. 8, information (image 236) that indicates a high possibility that operator support may become unnecessary is superimposed and displayed on image data about a robot that has issued an attention request with a high degree of not requiring operator support and with a high possibility that operator support may become unnecessary, among image data about robots that have issued an attention request.

As shown in FIG. 8, image 231A displayed by output unit 23 of display device 20 includes image 236 that indicates a high degree of not requiring operator support and a high possibility that operator support may become unnecessary. In FIG. 8, image 236 indicates that the attention request issued from robot M3, "Pedestrian approaching", is likely not to require operator support.

In the case where the presentation information includes information that indicates a low degree of not requiring operator support, display controller 22 may cause output unit 23 to superimpose and display information that indicates a low degree of not requiring operator support on the image about the robot corresponding to this information, like image 236.

The above-described display mode for display (alert) may also be dynamically changed according to a change in the degree to which operator support becomes unnecessary, the change being associated with an hourly change in the circumstances around robots M1, etc. For example, in the case where the attention request of "Pedestrian approaching" has occurred, the degree to which operator support becomes unnecessity changes before and after the pedestrian who caused the attention request passes around robots M1, etc. In view of this, alert output unit 16 may change the output mode for alert, including whether to output an alert, according to a change in the circumstances around robots M1, etc. such as a change in the location of the pedestrian.

FIG. 9 is an explanatory diagram showing a third example of the method of presenting the presentation information according to the present embodiment.

FIG. 9 shows an example in which images 232, 233, 234, and 235 shown in FIG. 7 and information (images 237) indicating a numerical value that indicates the degree to which operator support becomes unnecessary are presented as the presentation information.

In FIG. 9, the information (images 237) indicating the numerical value of the degree to which operator support becomes unnecessary is superimposed and displayed on image data about robots that have issued an attention request.

As shown in FIG. 9, image 231B displayed by output unit 23 of display device 20 includes images 237 each indicating the degree to which operator support becomes unnecessary. In FIG. 9, image 237 superimposed and displayed on image data corresponding to robot M3 indicates 90% of the degree to which operator support to be provided at the attention request issued from robot M3, "Pedestrian approaching", becomes unnecessary. In FIG. 9, image 237 superimposed and displayed on image data corresponding to robot M2 indicates 0% of the degree to which operator support to be provided at the attention request issued from robot M2, "Approaching street-parked vehicle", becomes unnecessary. In FIG. 9, image 237 superimposed and displayed on image data corresponding to robot M4 indicates 40% of the degree to which operator support to be provided at the attention request issued from robot M4, "Passing by bicycle", becomes unnecessary.

In the case where the presentation information includes information that indicates the degree to which operator support becomes unnecessary by level, display controller 22 may cause output unit 23 to superimpose and display this information on image data about the robot corresponding to this information, like image 237. That is, the degree of unnecessity may be presented by percentage, or may be presented by level, such as five levels from 1 to 5, which may be defined arbitrarily in advance.

The above-described display mode for display (alert) may also be dynamically changed according to a change in the degree to which operator support becomes unnecessary, the change being associated with an hourly change in the circumstances around robots M1, etc.

FIG. 10 is an explanatory diagram showing a fourth example of the method of presenting the presentation information according to the present embodiment.

In FIG. 10 shows an example in which information about images 232, 233, 234, and 246 as in FIG. 7 is presented as the presentation information.

In FIG. 10, images 235 are superimposed and displayed on image data about robots that have issued an attention request, images 235 each being modified to be inconspicuous by, for example, reducing the size of characters according to the degree to which operator support becomes unnecessary.

As shown in FIG. 10, image 231C displayed by output unit 23 of display device 20 includes images 235 whose presentation method varies depending on the degree to which operator support becomes unnecessary. For example, the degree to which operator support to be provided at the attention request issued from robot M3, "Pedestrian approaching", becomes unnecessary is higher than the degree to which operator support to be provided at the attention request issued from robot M2, "Approaching street-parked vehicle", becomes unnecessary and the degree to which operator support to be provided at the attention issued from robot M4, "Passing by bicycle", becomes unnecessary. Thus, image 235 corresponding to robot M3 is displayed more inconspicuously than image 235 corresponding to robot M2 by using smaller characters.

Comparison between the attention request issued from robot M4, "Passing by bicycle", and the attention request issued from robot M2, "Approaching street-parked vehicle", shows that the attention request issued from robot M4, "Passing by bicycle", has a higher degree of not requiring operator support. Thus, image 235 that corresponds to robot M4 is displayed using smaller characters so as to become more inconspicuous than image 235 that corresponds to robot M2.

The above-described display mode for display (alert) may also be dynamically changed according to a change in the degree to which operator support becomes unnecessary, the change being associated with an hourly change in the circumstances around robots M1, etc. For example, in the case where the attention request of "Pedestrian approaching" has occurred, the degree to which operator support becomes unnecessity changes before and after the pedestrian who caused the attention request passes around robots M1, etc. In such a case, alert output unit 16 may change the output mode for alert, including whether to output an alert, according to a change in the circumstances around robots M1, etc. such as a change in the location of the pedestrian.

Moreover, image 235 that corresponds to robot M3 may be displayed light so as not to become more inconspicuous than image 235 that corresponds to robot M2 and image 235 that corresponds to robot M4. Image 235 that corresponds to robot M4 may also be displayed light so as to become more inconspicuous than image 235 that corresponds to robot M2.

FIG. 11 is an explanatory diagram showing a fifth example of the method of presenting the presentation information according to the present embodiment.

FIG. 11 shows an example in which information about images 232, 233, 234, and 235 as in FIG. 7 is presented as the presentation information.

In FIG. 11, in the case where the degree to which each attention request requires operator support is higher than a predetermined value, images 234 and 235 are not displayed on image data about robots that have issued an attention request.

As shown in FIG. 11, image 231D displayed by output unit 23 of display device 20 includes images 234 and 235 whose presentation methods vary if the degree to which operator support becomes unnecessary is higher than a predetermined value. For example, the degree to which operator support to be provided at the attention request issued from robot M3, "Pedestrian approaching", becomes unnecessary is higher than the predetermined value. Thus, for example, image 231D does not display image 234 that serves as a thick frame surrounding image 232 corresponding to robot M3, and image 235 that represents the type of the attention request occurred, which are shown in FIGS. 8 to 10.

The above-described display mode for display (alert) may also be dynamically changed according to a change in the degree to which operator support becomes unnecessary, the change being associated with an hourly change in the circumstances around robots M1, etc.

The predetermined value may be defined arbitrarily in advance, and there are no particular limitations on the predetermined value.

### [Operations of Notification System]

Next description is given processing performed by notification system 1 having the above-described configuration.

FIG. 12 is a flowchart showing one example of processing performed within server device 10 according to the present embodiment.

As shown in FIG. 12, in step S101, on-traveling information acquirer 11 of server device 10 acquires an attention request attention request information) transmitted from each of robots M1, etc., the attention request indicating, for example, conditions of traffic participants in the vicinity of robot M1, etc. when the attention request has occurred, and the type of the attention request that represents the cause of occurrence of the attention request.

In step S102, on-traveling information acquirer 11 acquires traveling information transmitted from each of robots M1, etc., the traveling information indicating, for example, the vehicle number of robot M1, etc., the current time, the traveling location of robot M1, etc., road conditions in the vicinity of robot M1, etc., and information about image data obtained by image capture by the one or more cameras mounted on robot M1, etc. On-traveling information acquirer 11 transmits the acquired traveling information and the attention request information acquired in step S101 to necessity-for-support determiner 14 of server device 10.

In step S103, necessity-for-support determiner 14 determines, for the attention request acquired in step S101, whether the degree to which operator support becomes necessary is higher than a predetermined value in accordance with the traveling information and the attention request information which have been transmitted from on-traveling information acquirer 11 in step S102.

Specifically, necessity-for-support determiner 14 firstly acquires the traveling information and the attention request information which have been transmitted from on-traveling information acquirer 11 in step S102. Necessity-for-support determiner 14 also acquires past attention request information from pre-driving attention request DB 12 stored in server device 10, the past attention request information indicating, for example, places where attention requests have occurred in the past, times when the attention requests have occurred, conditions of traffic participants in the vicinity of robots M1, etc. when the attention requests have occurred, road conditions in the vicinity of robots M1, etc. when the attention requests have occurred, the types of the attention requests that represent the causes of occurrence of the attention requests, and information about the presence or absence of operator support for the attention request.

Then, for example, necessity-for-support determiner 14 may obtain the degree to which operator support to be provided at the attention request occurred becomes unnecessary, in accordance with the traveling information, the attention request information, and the past attention request information which have been acquired. Necessity-for-support determiner 14 determines whether operator support is necessary, in accordance with whether the obtained degree is higher than a predetermined value. For example, necessity-for-support determiner 14 may extract, from among the acquired past attention request information, those items that include the places of occurrence of past attention requests whose differences in distance from the traveling location of robot M1, etc. in the acquired traveling information are shorter than a predetermined distance. Necessity-for-support determiner 14 references the information about the presence or absence of operator support associated with the extracted item of past attention request information and calculates the ratio of the presence or absence of operator support in the extracted item of past attention request information so as to determine the calculated ratio as the degree to which operator support becomes unnecessary.

Then, if the obtained degree to which operator support becomes unnecessary is higher than the predetermined value (Yes in S103), necessity-for-support determiner 14 determines that the attention request occurred does not require operator support. Then, necessity-for-support determiner 14 generates, based on the determination result, necessity-for-support information for determining whether the attention request occurred requires operator support. The predetermined value and the predetermined distance may be defined arbitrarily, and there are no particular limitations on the predetermined value and the predetermined distance. Details thereof will be described later.

In step S104, if it is determined that the degree to which operator support becomes unnecessary is high, i.e., operator support is unnecessary (Yes in S103), notification controller 15 of server device 10 acquires the necessity-for-support information generated by necessity-for-support determiner 14 in step S103. Notification controller 15 further acquires information necessary for determining a predetermined notification condition. For example, as the information necessary for determining a predetermined notification condition, notification controller 15 may acquire remote operation information from remote operator DB 13 of server device 10, the remote operator information including, for example, information about each operator and information about whether each operator is engaging in support of robots M1, etc. Details of the predetermined notification condition will be described later.

In step S105, notification controller 15 determines whether to change the method of presenting the attention request, in accordance with the necessity-for-support information and the remote operator information which have been acquired in step S104. For example, if the necessity-for-support information indicates a high degree to which operator support becomes necessary and the remote operator information indicates a large number of operators who are engaging in support, notification controller 15 determines to change the method of presenting the attention request, including how to change the method, such as changing the presentation method to make the attention request inconspicuous as compared to the other attention requests. In this way, even the attention request that is likely not to require operator support is made easy for the operator to notice without changing the presentation method as much as possible. This reduces the possibility that, in the case where many operators are engaging in support, overall operation efficiency may decrease and a delay may occur in responding to an attention request that essentially requires support, as a result of the operators being distracted by attention requests that are likely not to require operator support.

Note that a configuration may be such that the presentation method is determined according to the degree to which operator support becomes unnecessary.

In step S106, notification controller 15 generates information about the change of the presentation method determined in step S105.

In step S107, notification controller 15 generates notification information based on the attention request information and transmits the generated notification information to alert output unit 16 of server device 10, the notification information including, for example, the traveling information and information for identifying a robot for which notification such as an alert is provided.

For example, if Yes in step S103 and Yes in step S105, notification controller 15 generates notification information that includes the information generated about the change of the presentation method in step S106. On the other hand, for example, if No in step S103 or No in step S105, notification controller 15 generates notification information that does not include the information generated about the change of the presentation method in step S106.

In step S108, alert output unit 16 acquires the notification information transmitted from notification controller 15 in step S107 and generates presentation information based on, for example, information included in the traveling information acquired by on-traveling information acquirer 11, the information being about the image data obtained by image capture by the one or more cameras mounted on robots M1, etc. Alert output unit 16 also transmits the presentation information to display device 20 so as to cause display device 20 to output the presentation information.

FIG. 13 is a flowchart showing one example of processing performed by necessity-for-support determiner 14 according to the embodiment. The processing shown in FIG. 13 shows details of the processing executed in step S103 shown in FIG. 12.

In step S201, necessity-for-support determiner 14 acquires the traveling information, the attention request information, and the past attention request information and searches for and extracts, from among attention requests that have occurred in the past, those that are similar to the attention request that has occurred this time. For example, necessity-for-support determiner 14 extracts, from the past attention request information, those items that include the places of occurrence of past attention requests whose differences in distance from the place of occurrence of the attention request in the attention request information are within a predetermined threshold value.

Note that, as criteria for searching for past attention requests that are similar to the attention request occurred, necessity-for-support determiner 14 may use not only the place of occurrence of the attention request, but also one or a combination of information items including the time of occurrence of the attention request, conditions of traffic participants in the vicinity of the place of occurrence of the attention request, and road conditions in the vicinity of the place of occurrence of the attention request.

In step S202, necessity-for-support determiner 14 calculates, in accordance with the attention request information and the past attention request information extracted in step S201, the degree to which operator support becomes unnecessary, the degree being used to determine whether operator support to be provided at the attention request occurred is necessary. For example, necessity-for-support determiner 14 may focus on, from among the extracted past attention request information, those items that indicate past attention requests that are the same as the attention request indicated by the attention request information in both the conditions of traffic participants in the vicinity of robots M1, etc. and the road conditions in the vicinity of robots M1. Then, necessity-for-support determiner 14 calculates the ratio of past attention requests that do not include information about the presence or absence of operator support, i.e., that had not received operator support, in the focused past attention request information, as the degree to which operator support becomes unnecessary.

Note that the degree to which operator support becomes unnecessary may be indicated by a binary value, instead of the ratio, the binary value allowing determination as to whether operator support is necessary or unnecessary, for example, in such a manner that 0 indicates that operator support is unnecessary, whereas 1 indicates that operator support is necessary.

The robots that have issued attention requests in the extracted past attention request information and the robot that has issued the attention request acquired in step S101 may be the same robot, or may be different robots.

In the calculation of the degree of unnecessity, the degree of unnecessity may be determined by weighing using the degree of influence on traffic participants in the vicinity of robots M1, etc., instead of by simple calculation using only the number of times operator support was provided in the past.

For example, even if the number of times operator support was provided is small, it cannot be said that operator support is unnecessary when the influence of the attention request on the circumstances around robots M1, etc. is large, i.e., when the degree of influence is large Thus, for example, in the case of such an attention request, weighting using the degree of influence may be further conducted on the degree of unnecessity calculated from the number of times operator support was provided, so that the calculated degree of unnecessity will become lower than in the case where the weighing is not conducted.

In step S203, necessity-for-support determiner 14 determines whether operator support to be provided at the attention request occurred is necessary, on the basis of the degree to which operator support becomes unnecessary, calculated in step S202. For example, if the degree to which operator support becomes unnecessity, calculated in step S202, is higher than a threshold value, necessity-for-support determiner 14 determines that operator support to be provided at the attention request occurred is unnecessary.

Note that the determination result may use a ratio to indicate the degree to which operator support becomes unnecessity, such as that the possibility that operator support may become unnecessary is 80%. As another alternative, the determination result may indicate that operator support is unnecessary as a result of comparison with other attention requests.

In step S204, necessity-for-support determiner 14 generates necessity-for-support information on the basis of the result determined in step S203 and transmits the generated necessity-for-support information to notification controller 15. The necessity-for-support information may include, for example, information for identifying whether operator support to be provided at the attention request occurred is necessary, such as the information indicating the result obtained in S203, the attention request information, and the traveling information.

FIG. 14 is a flowchart showing one example of processing performed by notification controller 15 according to the embodiment. The processing shown in FIG. 14 is one example of detailed processing performed in step S105 shown in FIG. 12.

Note that the flowchart shown in FIG. 14 focuses on one of a plurality of operators who monitor robots M1, etc. by checking image data displayed on display devices 20, and shows a case in which the ratio of the number of operators who are engaging in support, such as operating robots M1, etc., to a plurality of operators is adopted as a predetermined notification condition. For example, notification controller 15 calculates the ratio of operators who are engaging in support, such as operating robots M1, etc., to a plurality of operators and determines load conditions of one of the operators on the basis of the calculated ratio. For example, if the calculated ratio is higher than a predetermined ratio, notification controller 15 determines that the load conditions of one operator are high and determines to change the method of presenting attention requests (specifically, alerts corresponding to the attention requests) with a high degree of not requiring operator support.

Note that the aforementioned plurality of operators may be one operator. In that case, for example, the predetermined notification condition to be adopted may be whether the operator is engaging in support. For example, if the operator is engaging in support, notification controller 15 may determine that the load conditions of the operator are high and prevents the presentation of an attention request (more specifically, an alert) with a high degree of not requiring operator support.

In step S301, notification controller 15 acquires the remote operator information from remote operator DB 13. The acquired remote operator information may include information indicating, for example, a total number of operators who monitor robots M1, etc. and the number of operators who are engaging in support.

In step S302, notification controller 15 calculates the ratio of the number of operators who are engaging in support to the total number of operators in accordance with the remote operator information acquired in step S301.

In step S303, notification controller 15 determines whether to change the method of presenting the issued attention request with a high ratio of cases where operator support becomes unnecessary, on the basis of the ratio of the number of operators who are engaging in support, calculated in step S302. For example, if the ratio of operators who are engaging in support is higher than a predetermined threshold value, notification controller 15 determines that the load conditions of the operator are high and changes the method of presenting the issued attention request with a high ratio of cases where operator support becomes unnecessary. On the other hand, for example, if the ratio of operators who are engaging in support is lower than or equal to the predetermined threshold value, notification controller 15 determines that the load conditions of the operator are low and does not change the method of presenting the issued attention request with a high ratio of cases where operator support becomes unnecessary.

Essentially, from the viewpoint of safety, it is desirable that even an attention request with a high ratio of cases where operator support becomes unnecessary may also be presented to the operator so that the operator can easily notice the attention request. However, in the case where the load conditions of the operator are high as the predetermined notification condition, the method of presenting an attention request with a high ratio of cases where operator support becomes unnecessary is changed to make the attention request inconspicuous. This prevents a decrease in overall operation efficiently and avoids a delay in responding to an attention request that essentially requires operator support for an attention request that essentially requires operator support, as a result of the operator being distracted by attention requests that are likely not to require operator support. Therefore, by changing the presentation method according to whether the load conditions of the operator are high, it is possible to operate robots M1, etc. while ensuring the safety of traveling of robots M1, etc. as much as possible without decreasing the operation efficiency of the operator.

Note that the predetermined notification condition to be adopted may be whether the number of traffic participants is smaller than a predetermined number. For example, notification controller 15 may obtain the number of traffic participants from the information indicating the conditions of traffic participant in the vicinity of robots M1, etc. and determine whether to change the presentation method depending on whether the obtained number of traffic participants is smaller than a predetermined number. For example, if the number of traffic participants is smaller than the predetermined number, notification controller 15 may determine that the degree of influence of the attention request on the traffic participants in the vicinity of robots M1, etc. is low. In this case, for example, notification controller 15 may change the presentation method such that the alerts corresponding to attention requests with high degrees to which operator support becomes unnecessary, among a plurality of attention requests that have occurred, are displayed more inconspicuously than the alerts corresponding to the other attention requests, such as being displayed lighter than the alerts corresponding to the other attention requests.

This reduces the possibility that robots M1, etc. may become obstructions or nuisances to the traffic participants in the vicinity of robots M1, etc. while reducing, as much as possible, the load on the operator caused by attention requests with high degrees of not requiring operator support.

Alternatively, whether to change the presentation method may be determined according to the sizes of robots M1, etc. that have issued an attention request.

For example, in the case where the road is narrow and robots M1, etc. are large in size, if robots M1, etc. stop on the occurrence of an event, it has a large influence on the circumstances around robots M1, etc. In such a case, for example, other vehicles may become unable to pass or pass by robots M1, etc. On the other hand, in the case where robots M1, etc. are small in size, such an influence is also small. For example, if robots M1, etc. are small in size, other vehicles are able to pass or pass by robots M1, etc.

Therefore, in the case where an attention request has a low degree of not requiring operator support but robot M1, etc. that has issued the attention request is small in size, the presentation information corresponding to the attention request may be presented ins may be presented inconspicuously.

Although the size of robots M1, etc. may be simply used as a criterion, but since it depends on the width of the traveling road, the presentation method may be changed according to the ratio of the width of robots M1, etc. to the width of the traveling road. The width of the traveling road may be measured by robots M1, etc. using obstacle sensors on site, or may be stored in advance in a road DB (e.g., a storage device of server device 10).

As another alternative, whether to change the presentation method may be determined depending on the status of a task being executed by robot M1, etc. that has issued the attention request. For example, there is a need to move robots M1, etc. whose delivery deadlines are approaching, without stopping. From this, in the case where an attention request has a low degree of unnecessity but has been issued from robot M1, etc. that has time to move, the presentation information corresponding to the attention request may be presented inconspicuously.

The frequency with which people approach robots M1, etc. varies depending on the services provided by robots M1, etc. Thus, whether to change the presentation method may be determined depending on the type of the services provided by robots M1, etc.

For example, for services with interactions with people such as a guide or guidance, it is conceivable that people will frequently approach robots M1, etc. On the other hand, for example, for services with no interactions with people such as cleaning, it is conceivable that people will rarely approach robots M1, etc.

Moreover, in the case where an attention request has a low degree of unnecessity but has been issued from robot M1, etc. that provides services with no interactions with people, the presentation information corresponding to the attention request may be presented inconspicuously.

The degree of unnecessity may be calculated by using not only the load conditions but also proficiency. In the case where information about proficiency of the operator may be acquired from remote operator DB 13 and this information shows high proficiency of the operator, even if the load conditions are low, the output mode may be changed to make inconspicuous the presentation information that corresponds to an attention request with a high degree of not requiring operator support.

Alternatively, the predetermined notification condition to be adopted may be whether the brightness (also referred to as lightness) in the vicinity of robots M1, etc. is higher than predetermined lightness. For example, notification controller 15 may determine whether the brightness in the vicinity of robots M1, etc. is higher than predetermined lightness, and changes the method of presenting alerts on the basis of the determination result. For example, in the case where the brightness in the vicinity of robots M1, etc. when the attention request has occurred is higher than or equal to predetermined lightness (i.e., it is bright), notification controller 15 may change the presentation method such that the alerts corresponding to attention requests with high degrees of not requiring operator support, among a plurality of attention request that have occurred, are presented more inconspicuously than the alerts corresponding to the other attention requests, such as being displayed lighter than the alerts corresponding to the other attention requests.

This reduces the load on the operator caused by attention requests that have a high degree of not requiring operator support and that have been issued when the circumstances around robots M1, etc. are bright, i.e., when it is easy for the operator to notice and respond to the attention requests occurred.

Note that notification controller 15 may determine whether the circumstances around the robots M1, etc. are bright, on the basis of values obtained from sensors such as an illuminance sensor, or on the basis of the time when an attention request has occurred, such as whether it is daytime and the sun has not been set yet. The various sensors from which robot information acquirer m2 acquires information may include an illuminance sensor.

Alternatively, the predetermined notification condition to be adopted may be whether the contents of operator support affect safety. For example, notification controller 15 may determine whether to change the presentation method on the basis of the result of determination as to whether the contents of operator support affect safety. The attention request information and the past attention request information may include information indicating the contents of operator support. For example, notification controller 15 may determine not only the presence or absence of operator support, but also the safety of the contents of operator support. For example, notification controller 15 may acquire information about the contents of operator support, and determine that the contents of operator support do not affect safety when the contents of operator support indicated by the past attention request information indicating an attention request similar to the attention request occurred, among the attention requests that have occurred in the past, are the contents of specific support that do not affect safety. For example, if it has been determined that the contents of operator support do not affect safety, notification controller 15 may change the presentation method such that the alerts corresponding to attention requests with high degrees of not requiring operator support, among attention requests that have occurred, are presented more inconspicuously than the alerts corresponding to the other attention requests, such as being displayed lighter than the alerts corresponding to the other attention requests.

As another alternative, the predetermined notification condition to be adopted may be whether the location is in a high-risk area (place) such as a location of frequent accidents. For example, notification controller 15 may determine whether to change the presentation method on the basis of the result of determination that is made as to whether the place where the attention request has occurred is a high-risk place, with reference to information about a risk level. For example, notification controller 15 may calculate a distance between the place where the attention request has occurred and each location with a risk level higher than or equal to a predetermined risk level, in accordance with the map information that includes information about traveling routes of robots M1, etc. as the traveling information, and a risk map that indicates, for example, where have most accidents occurred. For example, if the calculated distance is greater than a predetermined distance, notification controller 15 determines that the place where the attention request has occurred has a low risk level, i.e., has a high degree of not requiring operator support. In this case, for example, notification controller 15 may change the presentation method such that the alerts corresponding the attention requests with high degrees of not requiring operator support, among attention requests that have occurred, are presented more inconspicuously than the alerts corresponding to the other attention requests, such as being displayed lighter than the alerts corresponding to the other attention requests.

Alternatively, the predetermined notification condition to be adopted may be whether an attention period required when the attention request has occurred is longer than or equal to a predetermined period. For example, notification controller 15 may determine whether to change the presentation method, on the basis of the required attention period. For example, notification controller 15 may change the presentation method such that the alerts corresponding to attention requests whose attention periods required when the attention requests have occurred are long (i.e., longer than or equal to a predetermined period) are presented more inconspicuously than the alerts corresponding to the other attention requests, such as being displayed lighter than the alerts corresponding to the other attention requests.

This reduces the load on the operator caused by attention requests for which the required attention periods are long, i.e., attention requests that impose high load on the operator and have high degrees of not requiring operator support.

Note that the required attention period may be determined from required attention periods required for similar past attention requests, on the basis of the past attention request information. For example, the required attention periods for the past attention requests may be calculated from video of the operator or the like, included in the past attention request information, and stored in pre-driving attention request DB 12.

Alternatively, notification controller 15 may determine whether to change the presentation information by using a combination of the above-described predetermined notification conditions as the predetermined notification condition.

### [Summary]

As described above, server device 10 according to the present embodiment performs the following processing.

FIG. 15 is a flowchart showing a procedure of processing performed by server device 10 according to the present embodiment.

First, server device 10 acquires first attention request information from a mobile body that is remotely given attention to or operated by an operator, the first attention request information being information about a first event that has occurred in the vicinity of the mobile body at a first time (S401). The mobile body may, for example, be one of robots M1, etc. The first time may, for example, be a time while the operator is monitoring robots M1, etc. A first attention request may, for example, be an attention request that is transmitted from any of robots M1, etc. to server device 10 while the operator is monitoring robots M1, etc. A second attention request may, for example, be an attention request that was transmitted from any of robots M1, etc. to server device 10 in the past.

Then, server device 10 determines the degree of unnecessity in accordance with the first attention request information and past attention request information, the degree of unnecessity indicating the degree to which operator attention or operation to be given to or performed in response to the first attention request information becomes unnecessary, the past attention request information being information stored in a storage and associating second attention request information and support information, the second attention request information being acquired in a past time before the first time, the support information indicating operator support provided for the second attention request information (S402). For example, the past attention request information that includes the second attention request information and the support information may be stored in the storage by server device 10. The storage may, for example, be pre-driving attention request DB 12 described above.

Then, server device 10 determines the output mode for alert information based on the first attention request information in accordance with the degree of unnecessity (S403).

Then, server device 10 causes a terminal used by the operator to output the alert information in the determined output mode (S404). The alert information may, for example, be information for prompting the operator to give attention to an image of a robot with a high degree of requiring attention, and for preventing the operator from being distracted by an image of a robot with a low degree of requiring attention. The alert information may, for example, be an image (video), but may also be, for example, audio information and/or information for giving vibrations or the like to the operator. The terminal may, for example, be display device 20 described above. The terminal may also be, for example, a vibration generator and/or audio equipment such as a speaker for outputting sound.

Note that, when attention requests have been acquired from robots M1, etc., server device 10 may reduce the load on the operator by causing display devices 20 to display information about each attention request acquired from robots M1, etc. (e.g., information described below). For example, server device 10 may cause display devices 20 to display events that had actually occurred in the past and the contents of operator support to be provided at the events, with reference to past attention requests that refer to attention requests that had occurred in the past in the same location as the acquired attention request. Server device 10 may also cause display devices 20 to display the locations of occurrence of the events and the times of occurrence of the events.

This allows the operator to grasp what events may occur in advance.

Server device 10 may also vary the output mode for the presentation information, depending on whether past attention requests that had occurred in the same location as the acquired attention request affect safety.

This allows the operator to determine that more attention is required if the past attention requests affect safety.

Server device 10 may also vary the output mode for the presentation information, depending on whether the past attention requests that had occurred in the same location as the acquired attention request were within or in the vicinity of a risk area (e.g., within a predetermined distance from the risk area).

This allows the operator to determine that more attention is required if the past attention requests were within or in the vicinity of the risk area.

Note that the location of the risk area and the predetermined distance may be determined arbitrarily. These items of information may be stored in advance in the storage of server device 10.

For example, server device 10 may perform the following processing.

FIG. 16 is a flowchart showing the procedure of processing performed by server device 10 according to the present embodiment.

First, server device 10 acquires first attention request information from a mobile body that is remotely given attention to or operated by an operator, the first attention request information being information about a first event that has occurred in the vicinity of the mobile body (S501).

Then, server device 10 causes a terminal used by the operator to display information about the first attention request information in accordance with the first attention request information and past attention request information that is information stored in a storage and that associates second attention request information and support information, the second attention request information being acquired in a past time before the first time, the support information indicating operator support provided for the second attention request information (S502).

The information about the first attention request information may include, for example, support information that indicates operator support provided for the second attention request information about a second event that has occurred in the same location as the location of occurrence of the first event, information indicating the second event, information indicating whether the second event is safe, and information indicating whether the location is within a risk area.

### [Advantageous Effects]

Hereinafter, examples of the techniques obtained from the disclosure described in the specification of the present disclosure are shown, and advantageous effects or the like achieved by these techniques are described.

Technique 1 is an information processing method that is executed by a computer. The information processing method includes acquiring first attention request information from a mobile body that is remotely given attention to or operated by an operator, the first attention request information being information about an event that has occurred in vicinity of the mobile body at a first time, determining an unnecessity degree in accordance with the first attention request information and past attention request information, the unnecessity degree indicating a degree to which operator attention or operation to be given to or provided in response to the first attention request information becomes unnecessary, the past attention request information being information stored in a storage and associating second attention request information and support information, the second attention request information being acquired at a past time before the first time, the support information indicating operator support provided in response to the second attention request information, determining, in accordance with the unnecessity degree, an output mode of outputting alert information that is based on the first attention request information, and causing a terminal used by the operator to output the alert information in the output mode determined.

This information processing method may, for example, be a method that is executed by server device 10.

Conventionally, it has been envisioned that a notification is transmitted when some sort of operator support is required, such as temporarily stopping a mobile body (robot).

Here, for example, a system is assumed that enables an operator to remotely operate a robot at the operator's discretion in response to a notification transmitted from the robot. For example, in the case where it is difficult and impossible for a robot to automatically determine the timing of requiring remote operation, a remote request may be issued, and the operator may give attention to the robot in order to check the remote request and make determination. That is, instead of the robot issuing a remote request to require operator support as in conventional technology, a robot such as robot M1 or the like as described above issues an attention request to require operator attention in order to allow the operator to determine whether remote operation is necessary.

In such a system, since it is difficult for the robot to automatically make determination, the robot relegates the determination to the operator by issuing an attention request, and the operator gives attention to the robot to determine whether to provide support. Thus, a situation is also assumed in which the robot may also issue a notification that results in ultimately not requiring operator support. In such a case, operator support is not essential but is only recommended, and the operator performs remote operation at the operator's discretion.

However, if the robot is set to issue a remote request in various cases as described above, the number of remote requests will increase enormously, and the load on the operator who checks the requests and makes determination will increase.

Here, for example, in the case where operator support is not essential but is only recommended, the operator may provide support at the operator's discretion so that, for example, from among a plurality of attention requests, those that have a high possibility (probability) of not requiring operator support may be displayed in such a display mode that reduces appearance of those attention requests on display as compared with the other attention requests.

Specifically, with the information processing method according to one aspect of the present disclosure, the output mode for the alert information is determined based on the unnecessity degree. Thus, for example, the alert information based on the first attention request information that is assumed to have a high possibility of not requiring operator support (i.e., a high unnecessity degree) and the alert information based on the first attention request information that is assumed to have a high possibility of requiring operator support (e.g., a low unnecessity degree) may be output (presented) in different output modes (presentation modes) to the operator by the terminal. For example, the output mode may be changed for the alert information based on the first attention request information that is assumed to have a high possibility of not requiring operator support. For example, in the case where the unnecessity degree is greater than or equal to a predetermined degree, the alert information may be output in a first mode, and in the case where the unnecessity degree is less than the predetermined degree, the alert information may be output in a second mode. The first mode is the output mode that is more difficult for the operator to notice, such as using smaller characters and/or lighter color on display, than the second mode. This reduces the load on the operator caused by the alert information or the like that has a high possibility of not requiring operator support, and thereby allows the operator to flexibly provide support. Accordingly, it is possible with the information processing method according to one aspect of the present disclosure to reduce the load on the operator.

Note that the predetermined degree may be determined arbitrarily in advance, and there are no particular limitations on the predetermined degree. The unnecessity degree may be determined arbitrarily according to the contents of the attention request information.

Technique 2 is the information processing method according to Technique 1, in which the output mode is determined based on the unnecessity degree and a load condition relating to the operator attention or operation.

For example, the load conditions may refer to the number of operators who are giving attention to or operating the mobile body. The load conditions may also refer to, for example, the number of operators who are performing operation.

For example, the load conditions of each operator may be determined to be lower as the number of operators who are performing operation decreases. In such a case, it is conceivable that the operator are in relatively easy situations to provide support. On the other hand, for example, in the case where many operators are performing operation, the load conditions of each operator may be determined to be high. In such a case, it is conceivable that the operator is in relatively difficult situations to provide support. In view of this, for example, in the case where the unnecessity degree is greater than or equal to the predetermined degree and the load conditions are higher than or equal to a predetermined load value, the alert information may be output in the first mode, and in the case where the unnecessity degree is greater than or equal to the predetermined degree and the load conditions are lower than the predetermined load value, the alert information may be output in the second mode. In this case, the alert information is output in the output mode corresponding to the load conditions of the operator. Accordingly, it is possible to further reduce the load on the operator.

Note that the predetermined load value may be determined arbitrarily, and there are no particular limitations on the predetermined load value.

Technique 3 is the information processing method according to Technique 2, in which the load condition represents a total number of operators who are operating the mobile body with respect to a total number of operators who remotely give attention to or operate the mobile body.

For example, in the case where the total number of operators is 10 and the number of operators who are operating mobile bodies are eight, the ratio of the operators who are performing operation is calculated as 80%.

For example, the load conditions of each operator are determined to be high when the ratio of operators who are performing operation is high. In such a case, it is conceivable that the operator is in relatively difficult situations to provide support. On the other hand, for example, the load conditions of each operator are determined to be low when the ratio of the number of operators who are performing operation is low. In such a case, it is conceivable that the operator is in relatively easy situations to provide support. In view of this, for example, in the case where the unnecessity degree is greater than or equal to the predetermined degree and the ratio of the number of operators who are performing operation is higher than or equal to a predetermined ratio, the alert information may be output in the first mode, and in the case where the unnecessity degree is greater than or equal to the predetermine degree and the ratio of the number of operators who are performing operation is lower than the predetermined ratio, the alert information may be output in the second mode. The predetermined ratio may be set to, for example,75%, and the load conditions of the operator are determined to be high if the ratio of the operators is 80%. In this way, the alert information is output in the output mode corresponding to the load conditions of the operator. Accordingly, it is possible to further reduce the load on the operator.

Note that the predetermined ratio may be determined arbitrarily, and there are no particular limitations on the predetermined ratio.

Technique 4 is the information processing method according to any one of Techniques 1 to 3, in which the output mode is determined based on the unnecessity degree and a total number of traffic participants in vicinity the mobile body.

For example, if the number of traffic participants is small, it is conceivable that there is a low degree of influence that the operation performed on the mobile body by the operator has on the traffic participants. In view of this, for example, in the case where the unnecessity degree is greater than or equal to the predetermined degree and the number of traffic participants is smaller than a predetermined number of participants, the alert information may be output in the first mode, and in the case where the unnecessity degree is greater than or equal to the predetermined degree and the number of traffic participants is greater than or equal to the predetermined number of participants, the alert information may be output in the second mode. In this way, the alert information is output in the output mode corresponding to the degree of influence on the traffic participants. Accordingly, it is possible to further reduce the load on the operator.

Note that the predetermined number of participants may be determined arbitrarily, and there are no particular limitations on the predetermined number of participants. For example, the predetermined number of participants may be two or three or more.

The circumstances around the mobile body may, for example, be in any location within a predetermined distance from the mobile body, and may be determined arbitrarily. Traffic participants in the vicinity of the mobile body may, for example, be traffic participants who are within the predetermined distance or less from the mobile body, or may be traffic participants who are seen by a camera provided in the mobile body.

The predetermined distance may be determined arbitrarily, and there are no particular limitations on the predetermined distance.

Technique 5 is the information processing method according to any one of Techniques 1 to 4, in which the output mode is determined based on the unnecessity degree and lightness in vicinity the mobile body.

For example, in the case where the circumstances around the mobile body are bright, it is conceivable that the operator is in relatively easy situations to provide support and are easy to notice the mobile body even if the mobile body has problems with traveling. On the other hand, for example, in the case where the circumstances around the mobile body are dark, it is conceivable that the operator is in relatively difficult situations to provide support. In view of this, for example, in the case where the unnecessity degree is greater than or equal to the predetermined degree and lightness in the vicinity of the mobile body is higher than or equal to predetermined lightness, the alert information may be output in the first mode, and in the case where the unnecessity degree is greater than or equal to the predetermined degree and the lightness in the vicinity of the mobile body is lower than the predetermined lightness, the alert information may be output in the second mode. In this way, the alert information is output in the output mode corresponding to the load on operator support based on the lightness in the vicinity of the mobile body. Accordingly, it is possible to further reduce the load on the operator.

Note that the predetermined lightness may be determined arbitrarily in advance, and there are no particular limitations on the predetermined lightness. The lightness may be calculated based on time, or may take a numerical value measured as illuminance. For example, if the time is between 5:00 and 17:00, it is determined to be bright, i.e., lightness may be determined to be higher than or equal to the predetermined lightness, and if the time is outside the above time zone, it may be determined to be dark, i.e., lightness may be determined to be lower than the predetermined lightness.

Technique 6 is the information processing method according to any one of Techniques 1 to 5, in which the output mode is determined based on the unnecessity degree and whether contents of operator operation to be provided in response to the first attention request information affect safety.

The contents of operator operation may include those that affect safety and thus directly lead to accidents (i.e., high risk), such as driving the mobile body, and those that do not affect safety and thus do not directly lead to accidents (i.e., low risk), such as calling out to pedestrians in the vicinity of the mobile body (e.g., sound transmission from a speaker provided in the mobile body). For example, in the case where the contents of operator operation do not affect safety, the load on operator support is determined to be lower than in the case where the contents of operator operation affect safety. On the other hand, for example, in the case where the contents of operator operation affect safety, the load on operator support is determined to be high because the operator needs to pay special attention to provide support. In view of this, for example, in the case where the necessity degree is greater than or equal to the predetermined degree and the contents of operator operation do not affect safety, the alert information may be output in the first mode, and in the case where the unnecessity degree is greater than or equal to the predetermined degree and the contents of operator operation affect safety, the alert information may be output in the second mode. In this way, the alert information is output in the output mode corresponding to the load on operator support. Accordingly, it is possible to further reduce the load on the operator.

Note that the relationship between the contents of operator operation and safety may be determined arbitrarily in advance, and there are no particular limitations on that relationship. The contents of operator operation may be determined based on the first attention request information and the second attention request information. For example, the second attention request information may include the circumstances or the like around the mobile body and the contents of operator operation. The contents of operator operation to be adopted may, for example, be the contents of operator operation indicated by the second attention request information that includes the same or similar circumstances or the like around the mobile body (e.g., the locations of the mobile body are close) as or to those included in the first attention request information.

Technique 7 is the information processing method according to any one of Techniques 1 to 6, in which the output mode is determined based on the unnecessity degree and a risk level in an area in which the mobile body is operated by the operator in response to the first attention request information.

The risk level in the area may refer to, for example, the number of accidents that have occurred in the area. For example, the risk level in the area may be determined to be high when the number of accidents that have occurred in the area is greater than or equal to a predetermined number, and the risk level in the area may be determined to be low when the number of accidents that have occurred in the area is less than the predetermined number.

For example, in the case where the risk level is low, the load on operator support may be determined to be lower than in the case where the risk level is high. On the other hand, for example, in the case where the risk level is high, the load on operator support may be determined to be high because the operator needs to pay special attention to provide support. In view of this, for example, in the case where the necessity degree is greater than or equal to the predetermined degree and the risk level in the area is lower than a predetermined risk level, the alert information may be output in the first mode, and in the case where the unnecessity degree is greater than or equal to the predetermined degree and the risk level in the area is higher than or equal to the predetermined risk level, the alert information may be output in the second mode. In this way, the alert information is output in the output mode corresponding to the load on operator support. Accordingly, it is possible to further reduce the load on the operator.

Note that the predetermined risk level may be determined arbitrarily in advance, and there are no particular limitations on the predetermined risk level. The risk map that indicates the relationship between each area and the risk level may be stored in advance in the storage device of the information processing device.

Technique 8 is the information processing method according to any one Techniques 1 to 7, in which the output mode is determined based on the unnecessity degree and an attention period during which the operator gives attention to the first attention request information.

For example, whether the operator is giving attention to the mobile body may be determined based on video taken of the operator. For example, a time period during which the operator's line of sight continues to look at the image of a specific mobile body is calculated as the attention period during which the operator is giving attention to the mobile body

For example, as the attention period becomes shorter, there is a higher possibility that the operator does not consider operator support is necessary, and accordingly the load on operator support is determined to be low. In such a case, it is conceivable that the operator is in relatively easy situations to provide support. On the other hand, for example, as the attention period becomes longer, there is a higher possibility that the operator considers a problem may occur with the mobile body, and therefore the load on operator support is determined to be high. In such a case, it is conceivable that the operator is in relatively difficult situations to provide support. In view of this, for example, in the case where the unnecessity degree is greater than or equal to the predetermined degree and the attention period is shorter than a predetermined period, the alert information may be output in the first mode, and in the case where the unnecessity degree is greater than or equal to the predetermined degree and the attention period is longer than or equal to the predetermined period, the alert information may be output in the second mode. In this way, the alert information is output in the output mode corresponding to the load on operator support. Accordingly, it is possible to further reduce the load on the operator.

Technique 9 is the information processing method according to any one of Techniques 1 to 8, in which the output mode is determined to vary a display mode depending on the unnecessity degree.

Accordingly, the unnecessity degree can be displayed in an easy-to-understand manner to the operator.

Technique 10 is the information processing method according to any one of Techniques 1 to 9, in which the output mode is determined to display information indicating the unnecessity degree.

Accordingly, the unnecessity degree can be displayed in an easy-to-understand manner to the operator.

Technique 11 is the information processing method according to any one of Techniques 1 to 10, in which the output mode is determined to dynamically change a display mode according to a change in the unnecessity degree.

Accordingly, a change in the unnecessity degree can be displayed in an easy-to-understand manner to the operator.

Technique 12 is an information processing device that includes an acquirer that acquires first attention request information from a mobile body that is remotely given attention to or operated by an operator, the first attention request information being information about an event that has occurred in vicinity the mobile body at a first time, a first determiner that determines an unnecessity degree in accordance with the first attention request information and past attention request information, the unnecessary degree indicating a degree to which operator attention or operation to be given to or performed in response to the first attention request information becomes unnecessary, the past attention request information being information stored in a storage and associating second attention request information and support information, the second attention request information being acquired at a past time before the first time, the support information indicating operator support provided in response to the second attention request information, a second determiner that determines, in accordance with the unnecessity degree, an output mode of outputting alert information that is based on the first attention request information, and an output unit that causes a terminal used by the operator to output the alert information in the output mode determined.

The acquirer may, for example, be on-traveling information acquirer 11 described above. The storage may, for example, be pre-driving attention request DB 12 described above. The first determiner may, for example, be necessity-for-support determiner 14 described above. The second determiner and the output unit may, for example, be notification controller 15 and alert output unit 16, respectively.

Such an information processing device achieves effects similar to those achieved by the information processing method described above.

Technique 13 is an information processing method that is executed by a computer. The information processing method includes acquiring first attention request information from a mobile body that is remotely given attention to or operated by an operator, the first attention request information being information about a first event that has occurred in the vicinity of the mobile body at a first time, and causing a terminal used by the operator to display information about the first attention request information in accordance with the first attention request information and past attention request information, the past attention request information being information stored in a storage and associating second attention request information and support information, the second attention request information being acquired at a past time before the first time, the support information indicating operator support provided in response to the second attention request information.

This method reduces the load on the operator.

Technique 14 is the information processing method according to Technique 13, in which the terminal is caused to display, as the information about the first attention request information, the support information and information indicating a second event that has occurred at a location identical to a location of occurrence of the first event, the support information indicating operator support provided in response to the second attention request information about the second event, which is one of a plurality of items of the second attention request information stored in the storage.

Accordingly, the operator can know in advance what events may occur.

Technique 15 is the information processing method according to Technique 14, in which the terminal is caused to display the information about the first attention request information to vary a display mode depending on whether the second attention request information about the second event affects safety.

Accordingly, the operator can determine that more attention is needed if safety is concerned.

Technique 16 is the information processing method according to Technique 14 or 15, in which the terminal is caused to display the information about the first attention request information to vary a display mode depending on whether the location is within a range of a predetermined distance from a risk area.

Accordingly, the operator can determine that more attention is needed if the mobile body is within or in the vicinity of the risk area.

Note that general or specific aspects of the present disclosure may be realized as a system, a device, a method, an integrated circuit, a computer program, or a non-transitory recording medium such as a computer-readable CD-ROM. Alternatively, these aspects may also be realized as any combination of a system, a device, a method, an integrated circuit, a computer program, and a recording medium.

For example, the present disclosure may be realized as an information processing method, may be realized as a program for causing a computer to execute the information processing method, or may be realized as a non-transitory computer-readable recording modicum that records such a program thereon.

In the above-described embodiment, processing executed by a specific processing unit may be executed by a different processing unit. A sequence of a plurality of processing steps may be changed, or a plurality of processing steps may be executed in parallel.

For example, in the above-described embodiment, each constituent element of the processing unit such as the necessity-for-support determiner, the notification controller, or the alert output unit may be realized by executing a software program suitable for the constituent element. Each constituent element may also be realized by a program executor such as a CPU or a processor reading out and executing a software program recorded on a hard disk or a recording medium such as semiconductor memory.

Each constituent element may also be realized as hardware. Each constituent element may also be a circuit (or an integrated circuit). These circuits may configure a single circuit as a whole, or each may be different circuits. Each of these circuits may also be a general-purpose circuit or a dedicated circuit.

For example, the information processing device may be realized by a single device such as an information terminal, or may be realized by a plurality of devices. In the case where the information processing device is realized by a plurality of devices, the constituent elements of server device 10 described in the above embodiment may be allocated in any way.

The configurations according to Techniques 1 to 16 described above may be realized by any combination. For example, the output mode may be determined based on the unnecessity degree and at least one of (i) the load conditions of the operator, (ii) the number of operators who are operating mobile bodies among the total number of operators who remotely give attention to or operate mobile bodies, (iii) the number of traffic participants in the vicinity of the mobile body, (iv) the lightness in the surroundings of the mobile body, (v) whether the contents of operator operation performed in response to the first attention request information affect safety, (vi) the risk level in the area where the operator operates the mobile body in response to the first attention request information, and (vii) the attention period during which the operator gives attention to the mobile body in response to the first attention request information.

### [Other Embodiments]

While the present disclosure has been described thus far based on the embodiment, the present disclosure is not intended to be limited to the embodiment and so on described above.

For example, in the above-described embodiment, in the case where a predetermined event has been detected that is likely to cause problems for robots M1, etc. to continue autonomous traveling based on the traveling information including, for example, data obtained by a plurality of sensors of robots M1, etc., robots M1, etc. generate the attention request information in order to notify the operator of that fact. In the above-described embodiment, robots M1, etc. transmit the traveling information and the attention request information to server device 10 via the communication interface and network N. However, an example of generating an attention request is not limited to this example. Robots M1, etc. may output the traveling information that includes, for example, data obtained from a plurality of sensors of robots M1, etc., and server device 10 may generate the attention request information based on the received traveling information. In this case, robots M1, etc. transmits the traveling information that includes, for example, data obtained from the sensors of robots M1, etc. to server device 10 via the communication interface and network N.

For example, the above-described embodiment has described an example of the processing for changing the method of presenting alerts under the predetermined notification information in response to an attention request with a high degree of not requiring operator support, but the present disclosure is not limited to this example. In the case of assigning the operator who provides support in response to attention requests, the degree (ratio) to which operator support becomes unnecessary may be used, in addition to operator's proficiency. For example, in the case where there are two operators A and B with different proficiency levels, namely, operator A with high proficiency and operator B with low proficiency (i.e., operator A has higher proficiency than operator B), server device 10 may assign, among attention requests occurred, those with low degrees of not requiring operator support to operator A with high proficiency, and those with high degrees of not requiring operator support to operator B with low proficiency. For example, server device 10 may cause display devices 20 used to monitor robots M1, etc. by the operator to display alerts corresponding to the attention requests assigned to the operator.

Accordingly, operators with high proficiency are assigned to attention requests with low degrees of not requiring operator support, i.e., with high possibilities that robots M1, etc. may become obstructions or nuisances to traffic participants in the vicinity of robots M1, etc. if the operators do not respond to the attention requests.

Note that the proficiency level of each operator may be determined based on the remote operator information such as the year of experience of the operator.

For example, in the case where not enough past attention request information is stored in pre-driving attention request DB 12, server device 10 may not change the presentation method for the alerts corresponding to the attention requests occurred, and may present the alerts so that the operator can easily notice the alerts. This allows the operator to easily support robots M1, etc. while avoiding a situation in which robots M1, etc. may become obstructions or nuisances to traffic participants in the vicinity of robots M1, etc.

Note that whether enough past attention request information is stored or not may be determined from, for example, the number of types of the past attention request information such as the number of items of past attention request information, the places of occurrence, and/or the times of occurrence.

For example, in the above-described embodiment, in the case where attention requests have high degrees of not requiring operator support, the presentation method is changed so as to make the alerts corresponding to these attention requests more inconspicuously than the alerts corresponding to the other attention requests. In the case where operator support becomes necessary, the alerts corresponding to the attention requests may be notified of other low-load operators who have not received the attention requests, without changing the presentation method, in such a manner that the other operators can easily notice the alerts.

This enables the operator to speedily provide support even if attention requests that were considered not to require operator support become attention requests that require operator support.

To deal with cases where there are multiple causes of an attention request occurred, server device 10 may record the degree of importance and/or urgency of the causes of the attention request in the past attention request information. In the case where an attention request has occurred due to multiple causes, server device 10 may prioritize to provide support such as determining the output mode for an alert, on the basis of the degree of importance and/or urgency.

Moreover, server device 10 may record the degree of importance and/or urgency of attention request occurred, in the past attention request information and use the degree of importance and/or urgency as a basis to change the presentation method and/or to assign support of attention requests to the operator.

For example, robots M1, etc. may be connected to a manipulator such as a touch panel that can be operated by the operator for communication. This allows the operator to directly operate robots M1, etc. by operating the manipulator. Alternatively, information about operations of robots M1, etc. that are input to the manipulator by the operator may be transmitted to server device 10 and further transferred from server device 10 to robots M1, etc. so as to allow the operator to operate robots M1, etc.

For example, the manipulator and display devices 20 may be realized as one device such as a touch panel display.

For example, information indicating a plurality of robots M1, etc. that have issued an attention request (e.g., identifiers such as the names of robots M1, etc.) may be selected by the operator and displayed on display devices 20. For example, server device 10 may allow a user to select an attention request by listing information about the plurality of robots M1, etc. that have issued an attention request, on display devices 20. At this time, server device 10 may cause display devices 20 to display information for assisting selection. Examples of the information for assisting selection include the degree of unnecessity, se in actioning the selection include the degree of unnecessity, a risk area, events occurred in past attention requests, the contents of operator support provided in response to the events, and task statuses of robots M1, etc. Moreover, the information or the like used in the above-described predetermined notification condition may be used as the information for assisting selection.

For example, in the case where a new attention request with a low degree of unnecessity has occurred while the operator is giving attention to robots M1, etc., or in the case where the status of an attention request has changed from a high degree of unnecessity to a low degree of unnecessity while the operator is giving attention to robots M1, etc., the information about robots M1, etc., which is to be given attention to by the operator, may change. The operator needs to give priority to information about robots M1, etc. that have issued attention requests with lower degrees of unnecessity. However, if display on display devices 20 viewed by the operator changes without giving any regard for the operator's situations, the operator may become confused. This inhibits the operator from properly giving attention to the robots and will impose a burden on the operator. For example, in the case where a plurality of attention requests have occurred and information items corresponding to the attention requests are displayed in ascending order of the degree of unnecessity on display devices 20, if the degree of unnecessity changes and then the order of display on display device 20 changes suddenly, the operator will become confused. For example, in the case where information items corresponding to a plurality of attention requests are displayed from above in the order of the degree of unnecessity on the screens of display devices 20, the operator will become confused if the information displayed at the top on display devices 20 is suddenly displayed as the third information from the top,.

In view of this, in the case where a new attention request with a lower degree of unnecessity has occurred while the operator is giving attention to the other attention request, or in the case where the status of the attention request that is being given attention to by the operator has changed from a high degree of unnecessity to a low degree of unnecessity, server device 10 may ask the operator if the operator wants to switch views from the view showing robot M1, etc. that has issued an attention request with a highest degree of unnecessity, among robots M1, etc. that are being given attention to by the operator, to the view showing robot M1, etc. that has issued the new attention request with a low degree of unnecessity. For example, server device 10 may cause display device 20 to display such an inquiry about whether to switch views. Server device 10 may switch views when the operator has issued an instruction to switch views.

Server device 10 may acquire an instruction about which view to switch to which view from the operator and may control display device 20 to display according to the acquired instruction.

Server device 10 may also cause display device 20 to automatically switch between the view showing robot M1, etc. that has issued the new attention request with a low degree of unnecessity, among robots M1, etc. that are being given attention to by the operator, and the view showing robot M1, etc. that has issued an attention request with a highest degree of unnecessity.

Such automatic view switching reduces the load on the operator who is accustomed to switching views.

Whether views are switched automatically or by inquiry may be set for each operator.

Server device 10 may define remote requests as mandatory and attention requests as recommended and cause display devices 20 to display those requests so that the operator can distinguish and recognize them.

Robots M1, etc. may judge the degree of unnecessity and, if the degree of unnecessity is judged to be high, may not output an attention request.

Robots M1, etc. may also judge the degree of unnecessity and, if the predetermined notification condition is satisfied as described above, may not output an attention request.

Attention requests with low degrees of unnecessity may be handled in the same way as full-time monitoring, or may be handled with high priority under full-time monitoring.

The degree of unnecessity may be determined according to the result of recognition of an object to which an attention request is to be issued.

For example, people who often tamper with robots M1, etc. may be blacklisted. For example, in the case where blacklisted people are recognized when an attention request is output, robots M1, etc. may determine the degree of unnecessity to be high. Such a black list may be stored in advance in storages of robots M1, etc.

Server device 10 may change the method of presenting attention requests by interaction with the operators. For example, server device 10 may change the presentation method (display method) by a proposal (instruction) from an operator such that "Pedestrian approaching" is displayed inconspicuously and "Approaching street-parked vehicle" is highlighted and displayed conspicuously. In this way, the method of presenting attention requests may be customized by the operators.

This allows each operator to make the method of presenting attention requests "operator-friendly". This is considered to improve the efficiency of operator support to be provided at attention requests.

Server device 10 may also change the method of presenting attention requests by past support records of the operators. For example, server device 10 may change the method of presenting attention requests in accordance with the operator's past records of support provided for attention requests, such that attention requests that are same as those that could be supported in the past are presented inconspicuously, and attention requests that are the same as those that could not be supported in the past are highlighted. One example of the past support records is such that, as compared with the other operators, the operator is good at noticing "Pedestrian approaching" and can respond quickly, such as stopping robots M1, etc. as necessary, but is slow to notice "Approaching street-parked vehicle" and takes time to avoid it by stopping robots M1, etc.

This allows each operator to make more efficient the method of presenting attention requests.

The present disclosure is applicable not only to cases where attention requests received from robots M1, etc. serve as judgement requests, but also to cases where the attention requests serve as alerts (abnormality notifications) received from robots M1, etc.

The judgement requests received from robots M1, etc. as used herein refer to notifications that are given to operators in order for the operators to determine whether support such as remote operation is necessary.

Meanwhile, the abnormality notifications received from robots M1, etc. as used herein refer to notifications that report any changes or abnormalities (events out of the ordinary events), irrespective of whether the operators need to provide support such as remote operation.

For example, the judgement requests such as "Pedestrian approaching" are given in order for the operators to determine whether to stop robots M1. The operators need to operate robots M1, etc. as necessary in order to avoid collisions with pedestrians.

Meanwhile, for example, the abnormality notifications such as "Rear vehicle approaching" are given to inform the operators of the presence of a rear vehicle, and the operators do not need to take any action. In the case where there is, for example, a rear vehicle that is trying to pass robots M1, etc. from the right, the abnormality notification indicating the presence of the rear vehicle causes the operators to refrain from operating the robots such as making a right-hand turn.

In this way, the judgment requests indicate higher levels of risk such as accidents than the abnormality notifications.

Meanwhile, the abnormality notifications indicate lower levels of risk such as accidents than the judgement requests.

To level out the load conditions of each operator, server device 10 may change the output mode for the presentation information to such a notification that the load is imposed on the operator as the load conditions of the operator are low.

There are no particular limitations on the communication method between devices included in notification system 1 according to the above-described embodiment and so on. The communication between the devices may be wireless communication, or may be cable communication. The communication between the devices may also be a combination of wireless communication and cable communication.

Every numerical value used in the above description is merely an example in order to describe the present disclosure in detail, and the embodiment according to the present disclosure is not limited to the numerical values used by way of example.

The way of dividing functional blocks in the block diagrams is merely one example. A plurality of functional blocks may be realized as a single functional block; a single functional block may be divided into a plurality of functional blocks; or some functions may be transferred to other functional blocks. The functions of a plurality of functional blocks having similar functions may be processed in parallel or in time sequence by single hardware or software.

In the above-described embodiment, server device 10 is realized as a single device, but may be realized by a plurality of devices that are connected to one another.

A sequence of execution of the steps in each flowchart is merely one example in order to describe the present disclosure in detail, and may be any other sequence different from the one described above. Some of the steps described above may be executed simultaneously (in parallel) with other steps.

The present disclosure also includes other embodiments such as those obtained by applying various modifications conceivable by those skilled in the art to the above-described embodiment and those achieved by combining constituent elements and functions in the above-described embodiment arbitrarily without departing from the scope of the present disclosure.

### [Industrial Applicability]

The present disclosure is applicable to an information processing method used in the case where an operator gives attention to or operates a robot to be controlled.

### [Reference Signs List]

- 1: notification system (information processing system)
- 10: server device
- 11: on-traveling information acquirer
- 12: pre-driving attention request DB
- 13: remote operator DB
- 14: necessity-for-support determiner
- 15: notification controller
- 16: alert output unit
- 20, 20a, ..., 20n: display device
- 21: display communicator
- 22: display controller
- 23: output unit
- 231 to 237, 231A, 231B, 231C, 231D: image
- M1, M2, ..., MN: robot
- m1: image capturer
- m2: robot information acquirer
- m3: controller
- m4: communicator
- N: network
- T1: past attention request table
- T2: operator table

## Claims

1. An information processing method that is executed by a computer, the information processing method comprising:
acquiring first attention request information from a mobile body that is remotely given attention to or operated by an operator, the first attention request information being information about an event that has occurred in vicinity of the mobile body at a first time;
determining an unnecessity degree in accordance with the first attention request information and past attention request information, the unnecessity degree indicating a degree to which operator attention or operation to be given to or provided in response to the first attention request information becomes unnecessary, the past attention request information being information stored in a storage and associating second attention request information and support information, the second attention request information being acquired at a past time before the first time, the support information indicating operator support provided in response to the second attention request information;
determining, in accordance with the unnecessity degree, an output mode of outputting alert information that is based on the first attention request information; and
causing a terminal used by the operator to output the alert information in the output mode determined.

2. The information processing method according to claim 1,
wherein the output mode is determined based on the unnecessity degree and a load condition relating to the operator attention or operation.

3. The information processing method according to claim 2,
wherein the load condition represents a total number of operators who are operating the mobile body with respect to a total number of operators who remotely give attention to or operate the mobile body.

4. The information processing method according to claim 1,
wherein the output mode is determined based on the unnecessity degree and a total number of traffic participants in vicinity the mobile body.

5. The information processing method according to claim 1,
wherein the output mode is determined based on the unnecessity degree and lightness in vicinity the mobile body.

6. The information processing method according to claim 1,
wherein the output mode is determined based on the unnecessity degree and whether contents of operator operation to be provided in response to the first attention request information affect safety.

7. The information processing method according to claim 1,
wherein the output mode is determined based on the unnecessity degree and a risk level in an area in which the mobile body is operated by the operator in response to the first attention request information.

8. The information processing method according to claim 1,
wherein the output mode is determined based on the unnecessity degree and an attention period during which the operator gives attention to the first attention request information.

9. The information processing method according to claim 1,
wherein the output mode is determined to vary a display mode depending on the unnecessity degree.

10. The information processing method according to claim 1,
wherein the output mode is determined to display information indicating the unnecessity degree.

11. The information processing method according to claim 1,
wherein the output mode is determined to dynamically change a display mode according to a change in the unnecessity degree.

12. An information processing device comprising:
an acquirer that acquires first attention request information from a mobile body that is remotely given attention to or operated by an operator, the first attention request information being information about an event that has occurred in vicinity the mobile body at a first time;
a first determiner that determines an unnecessity degree in accordance with the first attention request information and past attention request information, the unnecessary degree indicating a degree to which operator attention or operation to be given to or performed in response to the first attention request information becomes unnecessary, the past attention request information being information stored in a storage and associating second attention request information and support information, the second attention request information being acquired at a past time before the first time, the support information indicating operator support provided in response to the second attention request information;
a second determiner that determines, in accordance with the unnecessity degree, an output mode of outputting alert information that is based on the first attention request information; and
an output unit that causes a terminal used by the operator to output the alert information in the output mode determined.

13. An information processing method that is executed by a computer, the information processing method comprising:
acquiring first attention request information from a mobile body that is remotely given attention to or operated by an operator, the first attention request information being information about a first event that has occurred in the vicinity of the mobile body at a first time; and
causing a terminal used by the operator to display information about the first attention request information in accordance with the first attention request information and past attention request information, the past attention request information being information stored in a storage and associating second attention request information and support information, the second attention request information being acquired at a past time before the first time, the support information indicating operator support provided in response to the second attention request information.

14. The information processing method according to claim 13,
wherein the terminal is caused to display, as the information about the first attention request information, the support information and information indicating a second event that has occurred at a location identical to a location of occurrence of the first event, the support information indicating operator support provided in response to the second attention request information about the second event, which is one of a plurality of items of the second attention request information stored in the storage.

15. The information processing method according to claim 14,
wherein the terminal is caused to display the information about the first attention request information to vary a display mode depending on whether the second attention request information about the second event affects safety.

16. The information processing method according to claim 14,
wherein the terminal is caused to display the information about the first attention request information to vary a display mode depending on whether the location is within a range of a predetermined distance from a risk area.
